(19) Europäisches Patentamt / European Patent Office / Office européen des brevets

(11) **EP 4 492 217 B1**

(12) **EUROPEAN PATENT SPECIFICATION**

(45) Date of publication and mention
of the grant of the patent:
**21.01.2026 Bulletin 2026/04**

(21) Application number: **24158445.7**

(22) Date of filing: **19.02.2024**

(51) International Patent Classification (IPC):
*G06F 3/12* *(2006.01)*    *H04L 67/14* *(2022.01)*

(52) Cooperative Patent Classification (CPC):
**G06F 3/1236; G06F 3/1213; G06F 3/1263;
G06F 3/1288;** H04L 67/60

(54) **PRINTING SYSTEM, PROGRAM, AND PRINTING METHOD**

DRUCKSYSTEM, PROGRAMM UND DRUCKVERFAHREN

SYSTÈME D'IMPRESSION, PROGRAMME ET PROCÉDÉ D'IMPRESSION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **12.07.2023 JP 2023114768**

(43) Date of publication of application:
**15.01.2025 Bulletin 2025/03**

(73) Proprietor: **FUJIFILM Business Innovation Corp.
Minato-ku
Tokyo (JP)**

(72) Inventor: **MATSUI, Takao
Tokyo (JP)**

(74) Representative: **Haseltine Lake Kempner LLP
Bürkleinstrasse 10
80538 München (DE)**

(56) References cited:
EP-A2- 1 939 723    US-A1- 2014 160 522
US-A1- 2017 371 607    US-A1- 2021 037 150

# EP 4 492 217 B1

**Description**

Background

(i) Technical Field

The present disclosure relates to a printing system, a program, and a printing method.

(ii) Related Art

Japanese Unexamined Patent Application Publication No. 2016-033765, for example, describes an information processing terminal that changes the number of sessions on the basis of a state of a printer to accelerate printing while reducing a load on a server. The information processing terminal includes reception means for receiving image data from the server through a first number of sessions and obtaining means for obtaining the state of the printer. The reception means changes the number of sessions from the first number of sessions to a second number of sessions on the basis of the state of the printer and receives image data from the server through the second number of sessions. The information processing terminal also includes transmission means for converting image data into print data and transmitting the print data to the printer.

US 2017/0371607 A1 discloses an image forming apparatus which is used in a system having a first group and one or more second groups into which a plurality of second image forming apparatuses are classified, and classified into the first group together with a third image forming apparatus. The image forming apparatus includes a transmitter configured to send target data to be shared to the plurality of second image forming apparatuses, one by one, classified into the second groups, and to send the target data to the third image forming apparatus.

Summary

A printing system where an information processing apparatus transmits print jobs to each of plural printing apparatuses and the print jobs are processed is known. In this kind of system, an upper limit might be provided for the number of sessions of each of plural printing apparatuses for simultaneously receiving print jobs and print jobs might be transmitted in order of completion of transmission preparation within the upper limit on a reception side.

An upper limit to the number of sessions for an information processing apparatus to simultaneously transmit print jobs to plural printing apparatuses, that is, an upper limit on a transmission side, however, is not taken into consideration. If the number of transmission sessions is too large, for example, transmission or reception of print jobs might fail due to a communication load or the like, and the print jobs might not be efficiently transmitted to printing apparatuses.

Accordingly, it is an object of the present disclosure to provide a printing system, a program, and a printing method capable of efficiently transmitting plural print jobs to plural printing apparatuses compared to when plural print jobs are simultaneously transmitted while taking into consideration only an upper limit to the number of sessions of each of the printing apparatuses for simultaneously receiving print jobs.

According to a first aspect of the present disclosure, there is provided a printing system including a processor configured to: obtain a first number of sessions, which indicates an upper limit to a number of sessions for simultaneously transmitting print jobs to a plurality of printing apparatuses; obtain a second number of sessions, which indicates an upper limit to a number of sessions of each of the plurality of printing apparatuses for simultaneously receiving print jobs; obtain a third number of sessions, which indicates a number of sessions of each of the plurality of printing apparatus where the printing apparatus is communicating print jobs; select, on a basis of the first number of sessions, the second number of sessions, and the third number of sessions, one of a plurality of print jobs for which transmission preparation has been completed; and transmit the selected print job to one of the plurality of printing apparatuses.

According to the first aspect of the present disclosure, the processor is configured to obtain estimated printing completion time, which is estimated time taken to complete printing based on print jobs waiting to be executed, for each of the plurality of printing apparatuses, and in which the processor is configured to preferentially transmit the selected print job to a printing apparatus whose estimated printing completion time is the shortest among printing apparatuses whose third number of sessions is smaller than the second number of sessions

According to a second aspect of the present disclosure, there is provided the printing system according to the first aspect, in which the processor is configured to update the estimated printing completion time of each of the plurality of printing apparatuses in accordance with changes in the third number of sessions.

According to a third aspect of the present disclosure, there is provided the printing system according to the second aspect, in which a total number of sessions that is a sum of the third number of sessions of the plurality of printing apparatuses is smaller than or equal to the first number of sessions

According to a fourth aspect of the present disclosure, there is provided the printing system according to any one of the first to third aspects, in which the processor is configured to select a first print job, which is a job whose data size is the smallest.

According to a fifth aspect of the present disclosure, there is provided the printing system according to the fourth aspect, in which each of the plurality of print jobs is associated in advance with one of the plurality of printing apparatuses, in which the processor is configured to transmit the first print job, whose data size is the smallest among print jobs associated with a printing apparatus whose estimated printing completion time is the shortest, to the associated printing apparatus.

According to a sixth aspect of the present disclosure, there is provided the printing system according to the fifth aspect, in which the processor is configured to obtain the estimated printing completion time of the printing apparatus associated with the first print job, in which the processor is configured to obtain estimated printing completion time at a time when the associated printing apparatus executes the first print job, and in which the processor is configured to add the estimated printing completion time of the first print job to the estimated printing completion time of the associated printing apparatus and update the estimated printing completion time of the associated printing apparatus.

According to an seventh aspect of the present disclosure, there is provided the printing system according to the sixth aspect, in which the processor is configured to obtain, after the update of the estimated printing completion time, the estimated printing completion time for each of the plurality of printing apparatuses, and in which the processor is configured to transmit a first print job, whose data size is the smallest among print jobs associated with a printing apparatus whose estimated printing completion time is the shortest among printing apparatuses whose third number of sessions is smaller than the second number of sessions.

According to a eighth aspect of the present disclosure, there is provided the printing system according to the seventh aspect, in which the processor is configured to transmit, if no print job is associated with the printing apparatus whose estimated printing completion time is the shortest, a first print job that is associated with another printing apparatus and whose data size is the smallest.

According to a ninth aspect of the present disclosure, there is provided the printing system according to any one of the first to eighth aspects, in which the processor is configured to detect a status of each of the plurality of printing apparatuses and exclude a printing apparatus whose status indicates an error as a candidate to which a print job is to be transmitted.

According to an tenth aspect of the present disclosure, there is provided a program causing a computer to execute a printing process. The printing process includes obtaining a first number of sessions, which indicates an upper limit to a number of sessions for simultaneously transmitting print jobs to a plurality of printing apparatuses, obtaining a second number of sessions, which indicates an upper limit to a number of sessions of each of the plurality of printing apparatuses for simultaneously receiving print jobs, obtaining a third number of sessions, which indicates a number of sessions of each of the plurality of printing apparatus where the printing apparatus is communicating print jobs, selecting, on a basis of the first number of sessions, the second number of sessions, and the third number of sessions, one of a plurality of print jobs for which transmission preparation has been completed, and transmitting the selected print job to one of the plurality of printing apparatuses. The printing process further comprises obtaining estimated printing completion time, which is estimated time taken to complete printing based on print jobs waiting to be executed, for each of the plurality of printing apparatuses, and preferentially transmitting the selected print job to a printing apparatus whose estimated printing completion time is the shortest among printing apparatuses whose third number of sessions is smaller than the second number of sessions.

According to an eleventh aspect of the present disclosure, there is provided a program causing a computer to execute a printing process including: obtaining a first number of sessions, which indicates an upper limit to a number of sessions for simultaneously transmitting print jobs to a plurality of printing apparatuses; obtaining a second number of sessions, which indicates an upper limit to a number of sessions of each of the plurality of printing apparatuses for simultaneously receiving print jobs; obtaining a third number of sessions, which indicates a number of sessions of each of the plurality of printing apparatus where the printing apparatus is communicating print jobs; selecting, on a basis of the first number of sessions, the second number of sessions, and the third number of sessions, one of a plurality of print jobs for which transmission preparation has been completed; and transmitting the selected print job to one of the plurality of printing apparatuses. The printing method further comprises: obtaining estimated printing completion time, which is estimated time taken to complete printing based on print jobs waiting to be executed, for each of the plurality of printing apparatuses, and preferentially transmitting the selected print job to a printing apparatus whose estimated printing completion time is the shortest among printing apparatuses whose third number of sessions is smaller than the second number of sessions.

According to each of the first, tenth, and eleventh aspects of the present disclosure, plural print jobs can be efficiently transmitted to plural printing apparatuses compared to when the plural print jobs are simultaneously transmitted in consideration of only an upper limit to the number of sessions of each of the plural printing apparatuses for simultaneously receiving print jobs.

According to the first aspect of the present disclosure, print jobs can be transmitted to a printing apparatus whose estimated printing completion time is the shortest.

According to the second aspect of the present disclosure, estimated printing completion time can be updated in accordance with changes in the third number of sessions.

According to the third aspect of the present disclosure, print jobs can be efficiently transmitted to printing apparatuses in consideration of a relationship between the third number of sessions and the first number of sessions.

According to the fourth aspect of the present disclosure, print jobs can be efficiently transmitted to printing apparatuses compared to when a print job whose data size is the largest is selected.

According to the fifth aspect of the present disclosure, print jobs can be efficiently transmitted to printing apparatuses compared to when a print job whose data size is the largest is transmitted to a printing apparatus whose estimated printing completion time is the longest.

According to the sixth aspect of the present disclosure, print jobs can be efficiently transmitted to printing apparatuses compared to when constant estimated printing completion time is used.

According to the seventh aspect of the present disclosure, print jobs can be efficiently transmitted to printing apparatuses compared to when a print job whose data size is the largest is transmitted to a printing apparatus whose estimated printing completion time is the longest after the estimated printing completion time is updated.

According to the eighth aspect of the present disclosure, print jobs can be efficiently transmitted to printing apparatuses even when no print job is associated with a printing apparatus whose estimated printing completion time is the shortest.

According to the ninth aspect of the present disclosure, a printing apparatus whose status indicates an error can be excluded as a candidate to which a print job is to be transmitted.

Brief Description of the Drawings

An exemplary embodiment of the present disclosure will be described in detail based on the following figures, wherein:

Fig. 1 is a diagram illustrating an example of configuration of a printing system according to an exemplary embodiment;

Fig. 2 is a block diagram illustrating an example of electrical configuration of an information processing apparatus according to the exemplary embodiment;

Fig. 3 is a block diagram illustrating an example of electrical configuration of a printing apparatus according to the exemplary embodiment;

Fig. 4 is a diagram illustrating an example of configuration of a printing system in a comparative example;

Fig. 5 is a block diagram illustrating an example of functional configuration of the information processing apparatus according to the exemplary embodiment;

Fig. 6 is a diagram illustrating printing performed by the printing system according to the exemplary embodiment;

Fig. 7 is another diagram illustrating the printing performed by the printing system according to the exemplary embodiment;

Fig. 8 is another diagram illustrating the printing performed by the printing system according to the exemplary embodiment;

Fig. 9 is another diagram illustrating the printing performed by the printing system according to the exemplary embodiment;

Fig. 10 is another diagram illustrating the printing performed by the printing system according to the exemplary embodiment;

Fig. 11 is another diagram illustrating the printing performed by the printing system according to the exemplary embodiment;

Fig. 12 is another diagram illustrating the printing performed by the printing system according to the exemplary embodiment;

Fig. 13 is another diagram illustrating the printing performed by the printing system according to the exemplary embodiment;

Fig. 14 is another diagram illustrating the printing performed by the printing system according to the exemplary embodiment;

Fig. 15 is another diagram illustrating the printing performed by the printing system according to the exemplary embodiment;

Fig. 16 is a flowchart illustrating an example of a process for registering apparatus information achieved by a printing program according to the exemplary embodiment;

Fig. 17 is a flowchart illustrating an example of a process for calculating estimated printing completion time achieved by the printing program according to the exemplary embodiment;

Fig. 18 is a flowchart illustrating an example of a process for transmitting a print job achieved by the printing program according to the exemplary embodiment; and

Fig. 19 is another flowchart illustrating the example of the process for transmitting a print job achieved by the printing program according to the exemplary embodiment.

Detailed Description

An exemplary embodiment for implementing the techniques in the present disclosure will be described in detail hereinafter with reference to the drawings. Components and processing steps whose operations, actions, or functions are the same will be given the same reference numerals throughout the drawings, and redundant description thereof is omitted as appropriate. Each drawing is only a schematic illustration that is specific enough to facilitate sufficient understanding of the techniques in the present disclosure. The techniques in the present disclosure, therefore, are not limited to illustrated examples. In the present exemplary embodiment, description of components that are not directly related to the techniques in the present disclosure and known components might be omitted.

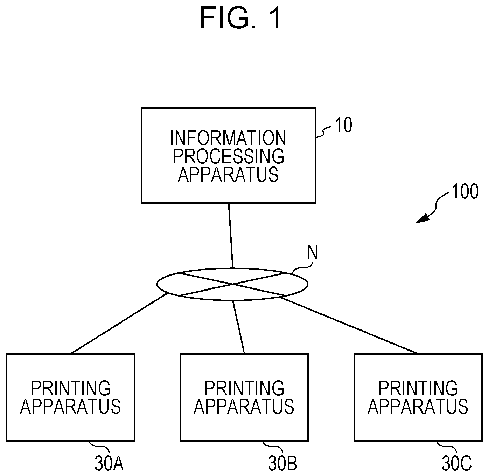

Fig. 1 is a diagram illustrating an example of configuration of a printing system 100 according to the present exemplary embodiment.

As illustrated in Fig. 1, the printing system 100 according to the present exemplary embodiment includes an information processing apparatus 10 and plural printing apparatuses 30A to 30C. Although there are three printing apparatuses in the example illustrated in Fig. 1, any number of printing apparatuses may be used. In the following description, the printing apparatuses 30A to 30C will be generically referred to as printing apparatuses 30 when the printing apparatuses 30A to 30C need not be distinguished from one another.

The information processing apparatus 10 is a computer apparatus that receives a print job from a superior apparatus (not illustrated) and that selectively transmits the received print job to one of the printing apparatuses 30A to 30C. The information processing apparatus 10 is connected to each of the printing apparatuses 30A to 30C over a network N, instructs each of the printing apparatuses 30A to 30C to perform printing, and manages printing conditions of the printing apparatuses 30A to 30C. The information processing apparatus 10 is capable of simultaneously transmitting print jobs to the printing apparatuses 30A to 30C and plural print jobs to a single printing apparatus. The network N is the Internet, a local area network (LAN), a wide area network (WAN), or the like. A connection mode of the network N is not limited, and may be wired, wireless, or a combination of wired and wireless.

A print job includes, for example, portable document format (PDF; registered trademark) data, which is an example of print data, and job definition format (JDF; registered trademark) data, which is an example of a job ticket. JDF is specifications for industry-standard document formats designed to share information between various manufacturing steps of printed materials for integrated management of pre-press, press, and post-press or formats for exchanging data between models. In JDF, details of a print instruction are described.

Each of the printing apparatuses 30A to 30C is an apparatus that executes functions relating to printing in accordance with print instructions from the information processing apparatus 10. Each of the printing apparatuses 30A to 30C has a printing function for performing printing on a recording medium, such as sheets of paper, in accordance with print data indicated by print jobs.

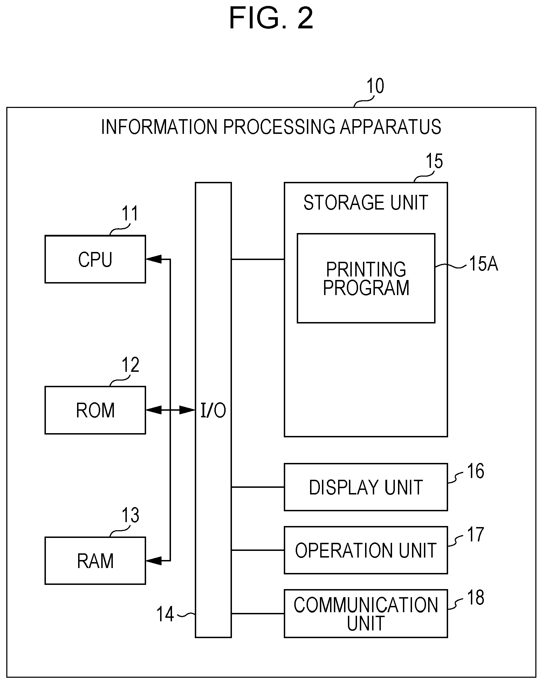

Fig. 2 is a block diagram illustrating an example of electrical configuration of the information processing apparatus 10 according to the present exemplary embodiment.

As illustrated in Fig. 2, the information processing apparatus 10 according to the present exemplary embodiment includes a central processing unit (CPU) 11, a read-only memory (ROM) 12, a random-access memory (RAM) 13, an input/output interface (I/O) 14, a storage unit 15, a display unit 16, an operation unit 17, and a communication unit 18.

The CPU 11, the ROM 12, the RAM 13, and the I/O 14 are connected to one another through a bus. Various function units including the storage unit 15, the display unit 16, the operation unit 17, and the communication unit 18 are connected to the I/O 14. These function units are mutually communicable with the CPU 11 through the I/O 14.

The CPU 11, the ROM 12, the RAM 13, and the I/O 14 together achieve a control unit. The control unit may control part or the entirety of operation of the information processing apparatus 10. An integrated circuit (IC), such as a large-scale integration (LSI) chip, or an IC chipset, for example, is used for part or the entirety of each of blocks of the control unit. A separate circuit or a partly or entirely integrated circuit may be used for each block. Different blocks may be integrated together, or some blocks may be separately provided. Part of each block may be separately provided. Not an LSI chip but a dedicated circuit or a general-purpose processor may be used for integration of the control unit, instead.

As the storage unit 15, for example, a hard disk drive (HDD), a solid-state drive (SSD), or a flash memory is used. The storage unit 15 stores a printing program 15A for performing printing according to the present exemplary embodiment. The printing program 15A may be stored in the ROM 12, instead.

The printing program 15A may be installed on, for example, the information processing apparatus 10 in advance. The printing program 15A may be stored in a nonvolatile storage medium or distributed over the network N and installed on the information processing apparatus 10 as appropriate. Examples of the nonvolatile storage medium include a compact disc read-only memory (CD-ROM), a magneto-optical disk, an HDD, a digital versatile disc read-only memory (DVD-ROM), a flash memory, and a memory card.

As the display unit 16, for example, a liquid crystal display (LCD) or an organic electroluminescent (EL) display is used. The display unit 16 may incorporate a touch panel. The operation unit 17 is provided with, for example, a device for inputting operations, such as a keyboard or a mouse. The display unit 16 and the operation unit 17 receive various instructions from a user of the information processing apparatus 10. The display unit 16 displays various pieces of information including results of processing performed in accordance with instructions received from the user and notifications about processing.

The communication unit 18 is connected to the network N such as the Internet, a LAN, or a WAN, for example, and capable of communicating with the printing apparatuses 30A to 30C over the network N.

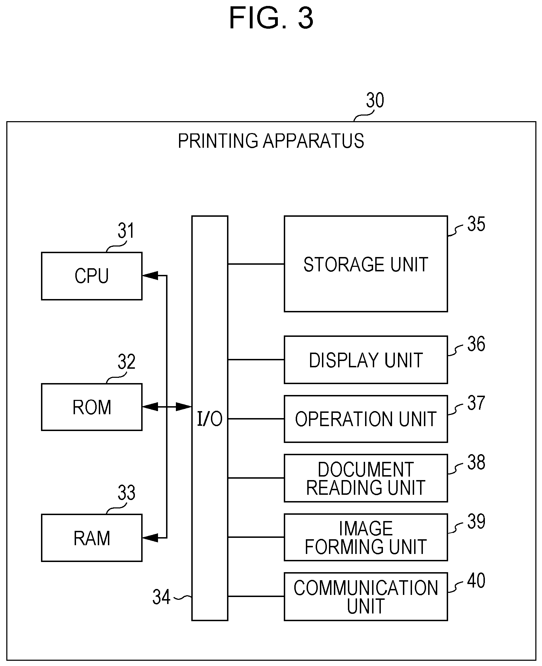

Fig. 3 is a block diagram illustrating an example of electrical configuration of the printing apparatus 30 according to the present exemplary embodiment.

As illustrated in Fig. 3, the printing apparatus 30 according to the present exemplary embodiment includes a CPU 31, a ROM 32, a RAM 33, an I/O 34, a storage unit 35, a display unit 36, an operation unit 37, a document reading unit 38, an image forming unit 39, and a communication unit 40.

The CPU 31, the ROM 32, the RAM 33, and the I/O 34 are connected to one another through a bus. Various function units including the storage unit 35, the display unit 36, the operation unit 37, the document reading unit 38, the image forming unit 39, and the communication unit 40 are connected to the I/O 34. These function units are mutually communicable with the CPU 31 through the I/O 34.

The CPU 31, the ROM 32, the RAM 33, and the I/O 34 together achieve a control unit. The control unit may control part or the entirety of operation of the printing apparatus 30.

As the storage unit 35, for example, an HDD, an SSD, or a flash memory is used. The storage unit 35 stores a control program for controlling printing. The control program may be stored in the ROM 32, instead.

As the display unit 36, for example, an LCD or an organic EL display is used. The display unit 36 may incorporate a touch panel. The operation unit 37 is provided with, for example, various operation keys including numeric keys and a start key. The display unit 36 and the operation unit 37 receive, as an operation panel, various instructions relating to an image processing function and settings. The various instructions include, for example, an instruction to start to read a document, an instruction to start to copy a document, and an instruction to execute a print job held by the printing apparatus 30. The display unit 36 displays various pieces of information including results of processing performed in accordance with instructions received from the user and notifications about processing.

The document reading unit 38 takes in document sheets disposed on a paper feed tray of an automatic document feeder (not illustrated) provided on a top of the printing apparatus 30 one by one and optically reads the document sheets to obtain image data. Alternatively, the document reading unit 38 optically reads a document sheet disposed on a document platform such as a platen glass to obtain image data.

The image forming unit 39 forms images based on image data obtained through reading performed by the document reading unit 38 or image data obtained in response to an instruction to execute a print job from the information processing apparatus 10 on sheets of paper, which are an example of a recording medium. Although electrophotography will be described hereinafter as an example of a method for forming an image, another method such as an inkjet method may be employed, instead.

When the method for forming an image is electrophotography, the image forming unit 39 includes a photosensitive drum, a charging device, an exposure device, a development device, a transfer device, and a fixing device. The charging device applies voltage to the photosensitive drum to charge a surface of the photosensitive drum. The exposure device forms an electrostatic latent image on the photosensitive drum by exposing the photosensitive drum charged by the charging device to light based on image data. The development device forms a toner image on the photosensitive drum by developing the electrostatic latent image formed on the photosensitive drum with toner. The transfer device transfers the toner image formed on the photosensitive drum onto a sheet of paper. The fixing device fixes the toner image transferred onto the sheet of paper through heating and pressurizing.

The communication unit 40 is a communication interface for connecting to the network N, such as the Internet, a LAN, or a WAN and capable of communicating with the information processing apparatus 10 over the network N.

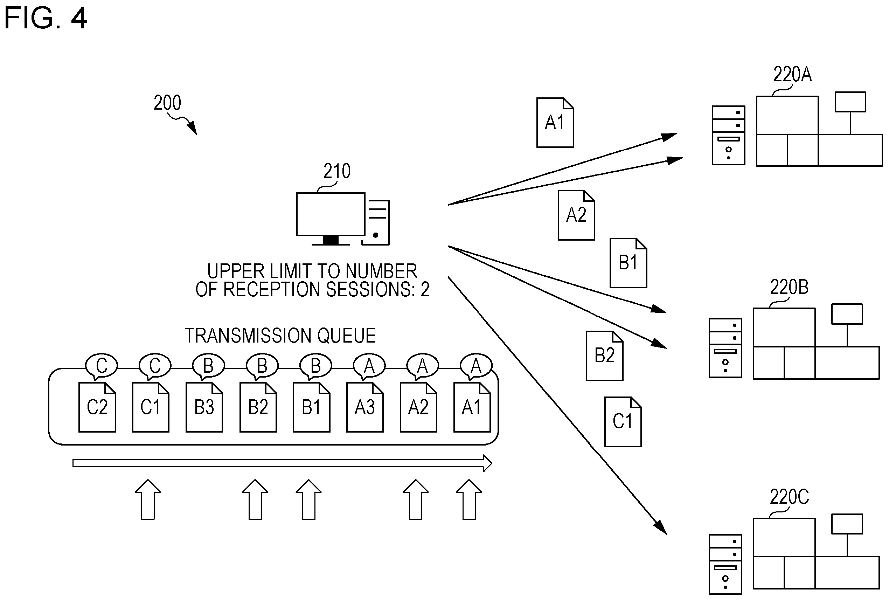

As illustrated in Fig. 4, in this kind of printing system 200, there is a case where an upper limit is provided for the number of sessions (reception sessions) of each of plural printing apparatuses 220A to 220C for simultaneously receiving print jobs and print jobs are transmitted in order of completion of transmission preparation within the upper limit on a reception side.

Fig. 4 is a diagram illustrating an example of configuration of the printing system 200 in a comparative example.

As illustrated in Fig. 4, the printing system 200 in the comparative example includes an information processing apparatus 210 and the printing apparatuses 220A to 220C. The information processing apparatus 210 sets an upper limit to the number of reception sessions at 2 and transmits print jobs to the printing apparatuses 220A to 220C in order of completion of transmission preparation within the upper limit of 2.

In the comparative example illustrated in Fig. 4, print jobs A1, A2, ..., C1, and C2 to be transmitted are stored in a transmission queue of the information processing apparatus 210 in order of completion of transmission preparation. The printing apparatus 220A is associated with the print jobs A1 to A3, the printing apparatus 220B is associated with the print jobs B1 to B3, and the printing apparatus 220C is associated with the print jobs C1 and C2.

The information processing apparatus 210 transmits the print jobs A1 and A2 to the printing apparatus 220A, the print jobs B1 and B2 to the printing apparatus 220B, and the print job C1 to the printing apparatus 220C. In this case, an upper limit to the number of sessions (transmission sessions) for the information processing apparatus 210 to simultaneously transmit print jobs to the printing apparatuses 220A to 220C, that is, an upper limit on a transmission side, is not taken into consideration. If the number of transmission sessions is too large, for example, transmission or reception of print jobs might fail due to a communication load or the like, and print jobs might not be efficiently transmitted to printing apparatuses.

The printing system 100 according to the present exemplary embodiment, therefore, selects, on the basis of a first number of sessions, a second number of sessions, and a third number of sessions, which will be described later, one of plural print jobs for which transmission preparation has been completed and transmits the selected print job to one of the printing apparatuses 30A to 30C. A "session" refers to a specific connection between the information processing apparatus 10 and the printing apparatus 30 for enabling the information processing apparatus 10 and the printing apparatus 30 to communicate with each other, and one print job is processed by setting one session.

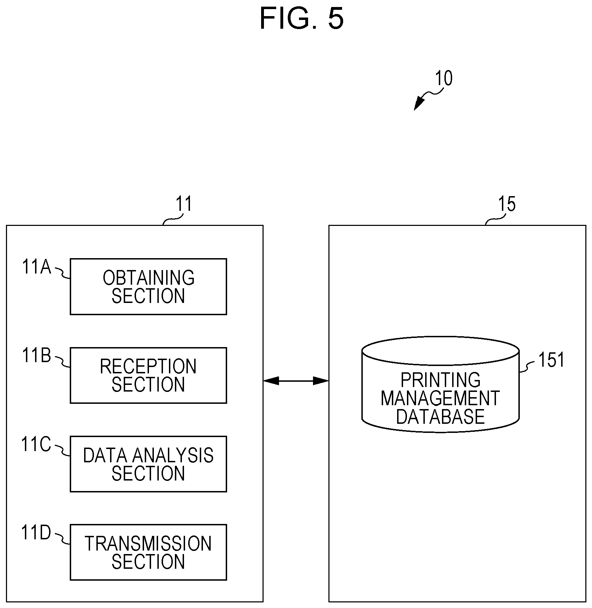

More specifically, the CPU 11 of the information processing apparatus 10 according to the present exemplary embodiment functions as components illustrated in Fig. 5 by loading the printing program 15A stored in the storage unit 15 into the RAM 13 and executing the printing program 15A. The CPU 11 is an example of a processor.

Fig. 5 is a block diagram illustrating an example of functional configuration of the information processing apparatus 10 according to the present exemplary embodiment.

As illustrated in Fig. 5, the CPU 11 of the information processing apparatus 10 according to the present exemplary embodiment functions as an obtaining section 11A, a reception section 11B, a data analysis section 11C, and a transmission section 11D.

The storage unit 15 stores a printing management database 151. Apparatus information regarding the printing apparatuses 30A to 30C and job information regarding print jobs are registered in the printing management database 151.

The obtaining section 11A obtains, from each of the printing apparatuses 30A to 30C as apparatus information, a status of the printing apparatus, the total number of pages of print jobs waiting to be executed, sheet size, and a pages per minute (PPM) and registers the apparatus information to the printing management database 151. The obtaining section 11A obtains the first number of sessions, the second number of sessions, and the third number of sessions. The first number of sessions indicates an upper limit to the number of sessions for simultaneously transmitting print jobs to the printing apparatuses 30A to 30C and corresponds to an upper limit to the number of transmission sessions. The second number of sessions indicates an upper limit to the number of sessions of each of the printing apparatuses 30A to 30C for simultaneously receiving print jobs and corresponds to an upper limit to the number of reception sessions. The third number of sessions indicates the number of sessions of each of the printing apparatuses 30A to 30C where the printing apparatus is communicating print jobs. The first number of sessions and the second number of sessions are registered, for example, to the printing management database 151 in advance. The third number of sessions is a variable identified from the number of sessions (i.e., the number of print jobs) during communication performed by each of the printing apparatuses 30A to 30C.

The reception section 11B receives a print job from a superior apparatus (not illustrated). The print job includes, for example, PDF data and JDF data. The reception section 11B obtains the number of pages and data size from the PDF data and the number of copies, print sheet size, and information (an identification number etc.) regarding an associated printing apparatus from the JDF data.

The data analysis section 11C selects, on the basis of the first number of sessions, the second number of sessions, and the third number of sessions obtained by the obtaining section 11A, one of plural print jobs that have been received by the reception section 11B and for which transmission preparation has been completed. That is, the data analysis section 11C determines which print job is to be transmitted to which printing apparatus 30 and notifies the transmission section 11D of a result of the determination.

The transmission section 11D transmits the print job selected by the data analysis section 11C to one of the printing apparatuses 30A to 30C. That is, the transmission section 11D sets a session for the printing apparatus 30 determined by the data analysis section 11C and transmits the selected print job. The transmission section 11D also manages the number of transmission sessions and the number of reception sessions.

The transmission section 11D may detect the status of each of the printing apparatuses 30A to 30C and exclude a printing apparatus whose status indicates an error as a candidate to which a print job is to be transmitted. That is, when the status of the printing apparatus 30 indicates an error and it is difficult to perform printing immediately, a session need not be set for the printing apparatus 30.

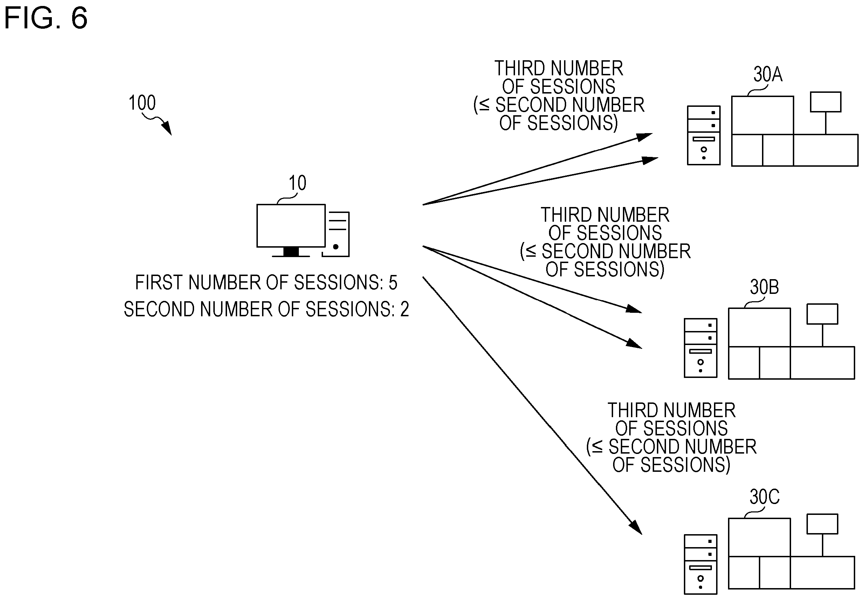

Fig. 6 is a diagram illustrating printing performed by the printing system 100 according to the present exemplary embodiment.

As illustrated in Fig. 6, the first number of sessions and the second number of sessions are set in the printing system 100, and the information processing apparatus 10 selectively transmits print jobs to each of the printing apparatuses 30A to 30C within a range of resources of the printing apparatus. In the present exemplary embodiment, the first number of sessions is set at 5, and the second number of sessions is set at 2.

More specifically, the data analysis section 11C selects, for example, a first print job, whose data size is the smallest among plural print jobs. The data analysis section 11C also calculates estimated printing completion time for each of the printing apparatuses 30A to 30C. The estimated printing completion time is estimated time taken to complete printing based on print jobs waiting to be executed. The estimated printing completion time is obtained using the following Expression (1). The information processing apparatus 10 or each of the printing apparatuses 30A to 30C may calculate the estimated printing completion time.

$$\text{Estimated printing completion time} = \text{Total number of pages to be printed}/\text{PPM of printing apparatus} \qquad (1)$$

$$\text{Total number of pages to be printed} = \text{Number of PDF pages} \times \text{Number of copies}$$

If print sheet size is A4 or smaller, however, the PPM of the printing apparatus is used as is, and if print sheet size is larger than A4, the PPM of the printing apparatus is reduced by half. Estimated printing completion time when a printing apparatus whose PPM is 100 prints 30 copies of a PDF document including 200 pages in A4, for example, is calculated as follows using the above Expression (1).

$$200 \text{ (pages)} \times 30 \text{ (copies)}/100 \text{ (PPM)} = 60 \text{ (minutes)}$$

The transmission section 11D preferentially transmits a print job (e.g., the first print job) to a printing apparatus 30 whose estimated printing completion time is the shortest among printing apparatuses 30 whose third number of sessions is smaller than the second number of sessions.

Here, the data analysis section 11C updates the estimated printing completion time of each of the printing apparatuses 30A to 30C in accordance with changes in the third number of sessions. The sum of the third number of sessions of the printing apparatuses 30A to 30C, however, is smaller than or equal to the first number of sessions.

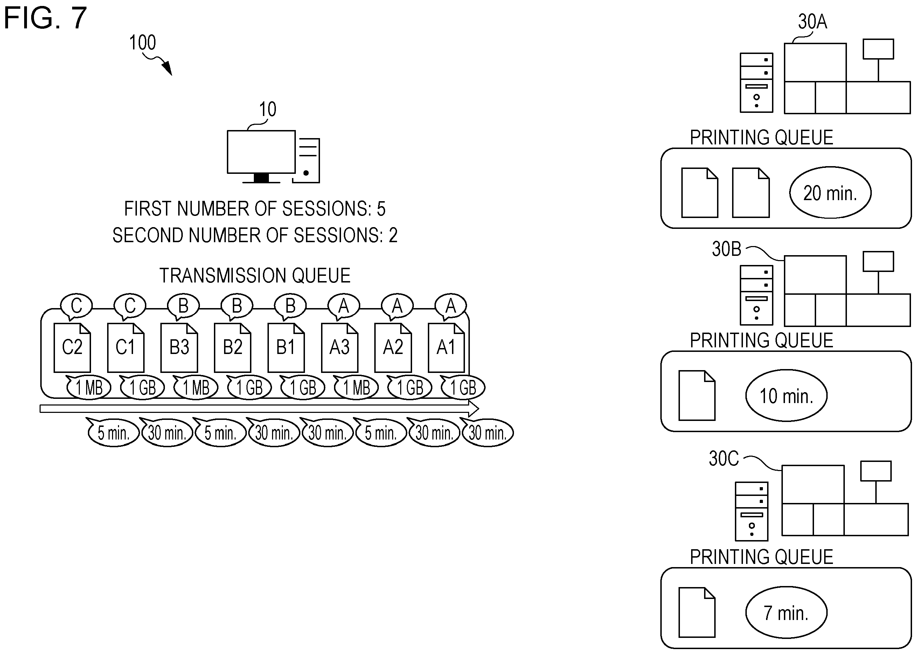

Next, a specific example of the printing performed by the printing system 100 according to the present exemplary embodiment will be described with reference to Figs. 7 to 15.

Figs. 7 to 15 are diagrams illustrating the printing performed by the printing system 100 according to the present exemplary embodiment. In the present exemplary embodiment, the first number of sessions is set at 5, and the second number of sessions is set at 2. An initial value of the third number of sessions of each of the printing apparatuses 30A to 30C is set at 0.

As illustrated in Fig. 7, print jobs A1, A2, ..., C1, and C2 to be transmitted are stored in a transmission queue of the information processing apparatus 10 in order of completion of transmission preparation. The printing apparatus 30A is associated with the print jobs A1 to A3, the printing apparatus 30B is associated with the print job B1 to B3, and the printing apparatus 30C is associated with the print jobs C1 and C2. Data size of the print job A1 is 1 GB, and estimated printing completion time of the print job A1 is 30 minutes. Data size of the print job A2 is 1 GB, and estimated printing completion time of the print job A2 is 30 minutes. Data size of the print job A3 is 1 MB, and estimated printing completion time of the print job A3 is 5 minutes. Data size of the print job B1 is 1 GB, and estimated printing completion time of the print job B1 is 30 minutes. Data size of the print job B2 is 1 GB, and estimated printing completion time of the print job B2 is 30 minutes. Data size of the print job B3 is 1 MB, and estimated printing completion time of the print job B3 is 5 minutes. Data size of the print job C1 is 1 GB, and estimated printing completion time of the print job C1 is 30 minutes. Data size of the print job C2 is 1 MB, and estimated printing completion time of the print job C2 is 5 minutes. The estimated printing completion times of these print jobs are calculated using the above Expression (1).

The data analysis section 11C calculates the estimated printing completion time of each of the printing apparatuses 30A to 30C using the above Expression (1). In an example illustrated in Fig. 7, estimated printing completion time of print jobs waiting to be executed in a printing queue of the printing apparatus 30A is 20 minutes. Similarly, estimated printing completion time of the printing apparatus 30B is 10 minutes, and estimated printing completion time of the printing apparatus 30C is 7 minutes.

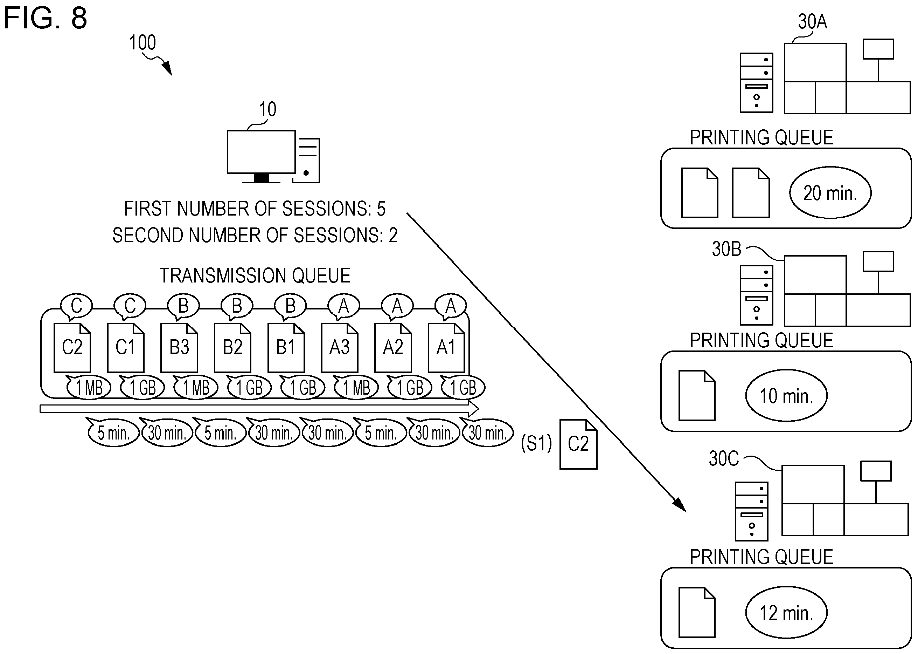

In order to transmit print jobs more efficiently, print jobs with smaller data sizes may be transmitted first. In S1 in Fig. 8, the transmission section 11D transmits the first print job (here, the print job C2), whose data size is the smallest among print jobs (here, the print jobs C1 and C2) associated with a printing apparatus (here, the printing apparatus 30C) whose estimated printing completion time is the shortest, to the associated printing apparatus (here, the printing apparatus 30C). The transmitted print job C2 is removed from a transmission queue.

The data analysis section 11C obtains 7 minutes, which is the estimated printing completion time of the printing apparatus 30C, and 5 minutes, which is the estimated printing completion time at a time when the printing apparatus 30C executes the print job C2, and updates the estimated printing completion time of the printing apparatus 30C by adding 5 minutes, which is the estimated printing completion time of the print job C2, to 7 minutes, which is the estimated printing completion time of the printing apparatus 30C. In an example illustrated in Fig. 8, the estimated printing completion time of the printing apparatus 30C is updated to 12 minutes, which is the sum of 7 minutes and 5 minutes. The estimated printing completion times after the update are 20 minutes for the printing apparatus 30A, 10 minutes for the printing apparatus 30B, and 12 minutes for the printing apparatus 30C. The third number of sessions of the printing apparatus 30C becomes 1.

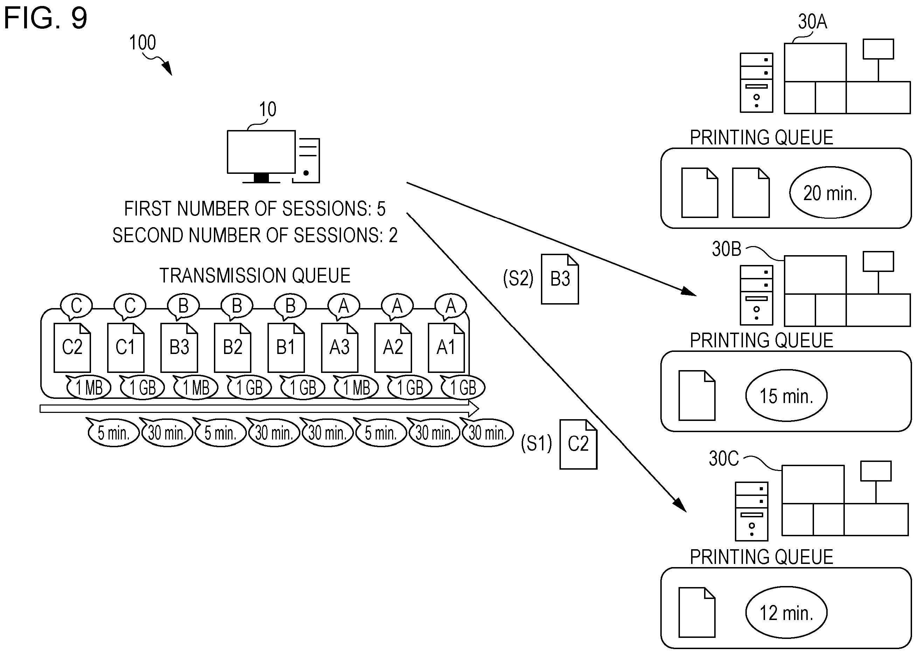

Next, in S2 in Fig. 9, the transmission section 11D transmits the first print job (here, the print job B3), whose data size is the smallest among print jobs (here, the print jobs B1, B2, and B3) associated with a printing apparatus whose estimated printing completion time after the update is the shortest (here, the printing apparatus 30B), to the associated printing apparatus (here, the printing apparatus 30B). The transmitted print job B3 is removed from the transmission queue.

The data analysis section 11C obtains 10 minutes, which is the estimated printing completion time of the printing apparatus 30B, and 5 minutes, which is the estimated printing completion time at a time when the printing apparatus 30B executes the print job B3, and updates the estimated printing completion time of the printing apparatus 30B by adding 5 minutes, which is the estimated printing completion time of the print job B3, to 10 minutes, which is the estimated printing completion time of the printing apparatus 30B. In an example illustrated in Fig. 9, the estimated printing completion time of the printing apparatus 30B is updated to 15 minutes, which is the sum of 10 minutes and 5 minutes. The estimated printing completion times after the update are 20 minutes for the printing apparatus 30A, 15 minutes for the printing apparatus 30B, and 12 minutes for the printing apparatus 30C. The third number of sessions of the printing apparatus 30B becomes 1.

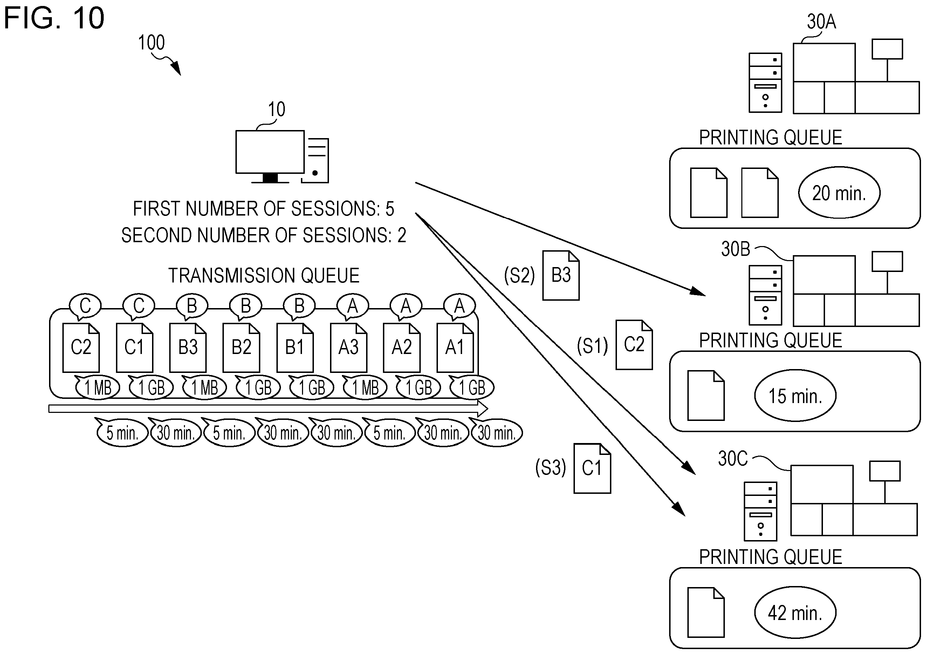

Next, in S3 in Fig. 10, the transmission section 11D transmits the first print job (here, the print job C1), whose data size is the smallest among print jobs (here, the print job C1) associated with a printing apparatus whose estimated printing completion time after the update is the shortest (here, the printing apparatus 30C), to the associated printing apparatus (here, the printing apparatus 30C). The transmitted print job C1 is removed from the transmission queue.

The data analysis section 11C obtains 12 minutes, which is the estimated printing completion time of the printing apparatus 30C, and 30 minutes, which is the estimated printing completion time at a time when the printing apparatus 30C executes the print job C1, and updates the estimated printing completion time of the printing apparatus 30C by adding 30 minutes, which is the estimated printing completion time of the print job C1, to 12 minutes, which is the estimated printing completion time of the printing apparatus 30C. In an example illustrated in Fig. 10, the estimated printing completion time of the printing apparatus 30C is updated to 42 minutes, which is the sum of 12 minutes and 30 minutes. The estimated printing completion times after the update are 20 minutes for the printing apparatus 30A, 15 minutes for the printing apparatus 30B, and 42 minutes for the printing apparatus 30C. The third number of sessions of the printing apparatus 30C becomes 2. That is, since the number of reception sessions of the printing apparatus 30C reaches the second number of sessions (upper limit), the printing apparatus 30C can no longer receive print jobs.

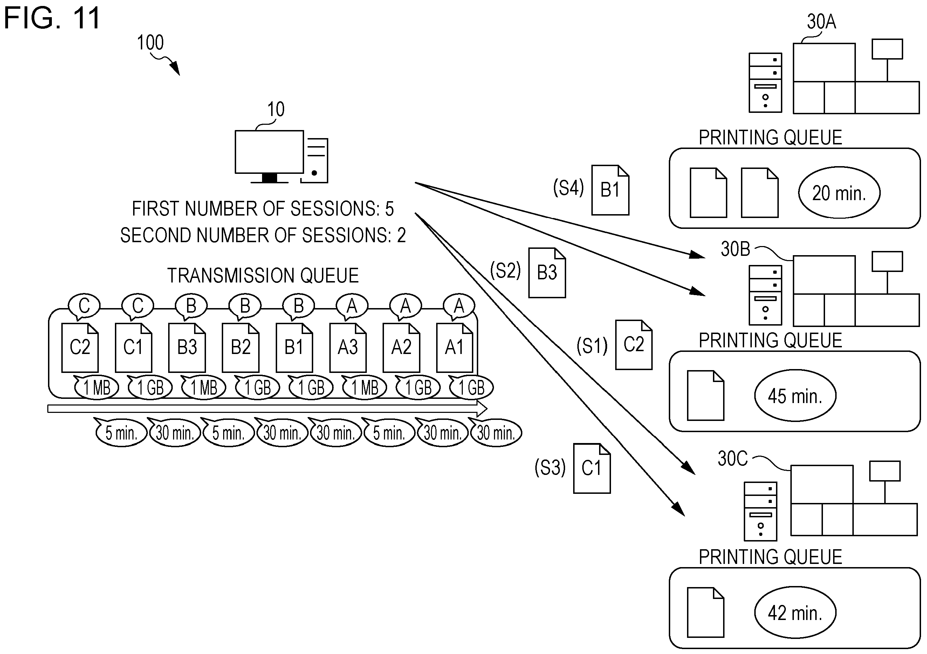

Next, in S4 in Fig. 11, the transmission section 11D transmits the first print job (here, the print job B1), whose data size is the smallest among print jobs (here, the print jobs B1 and B2) associated with a printing apparatus whose estimated printing completion time after the update is the shortest (here, the printing apparatus 30B), to the associated printing apparatus (here, the printing apparatus 30B). The transmitted print job B1 is removed from the transmission queue. Since the data size of the print jobs B1 and B2 is the same, the print job B2 may be selected, instead, but print jobs are selected in order of completion of transmission preparation here.

The data analysis section 11C obtains 15 minutes, which is the estimated printing completion time of the printing apparatus 30B, and 30 minutes, which is the estimated printing completion time at a time when the printing apparatus 30B prints the print job B1, and updates the estimated printing completion time of the printing apparatus 30B by adding 30 minutes, which is the estimated printing completion time of the print job B1, to 15 minutes, which is the estimated printing completion time of the printing apparatus 30B. In an example illustrated in Fig. 11, the estimated printing completion time of the printing apparatus 30B is updated to 45 minutes, which is the sum of 15 minutes and 30 minutes. The estimated printing completion times after the update are 20 minutes for the printing apparatus 30A, 45 minutes for the printing apparatus 30B, and 42 minutes for the printing apparatus 30C. The second number of sessions of the printing apparatus 30B is 2. That is, since the number of reception sessions of the printing apparatus 30B reaches the second number of sessions (upper limit), the printing apparatus 30B can no longer receive print jobs.

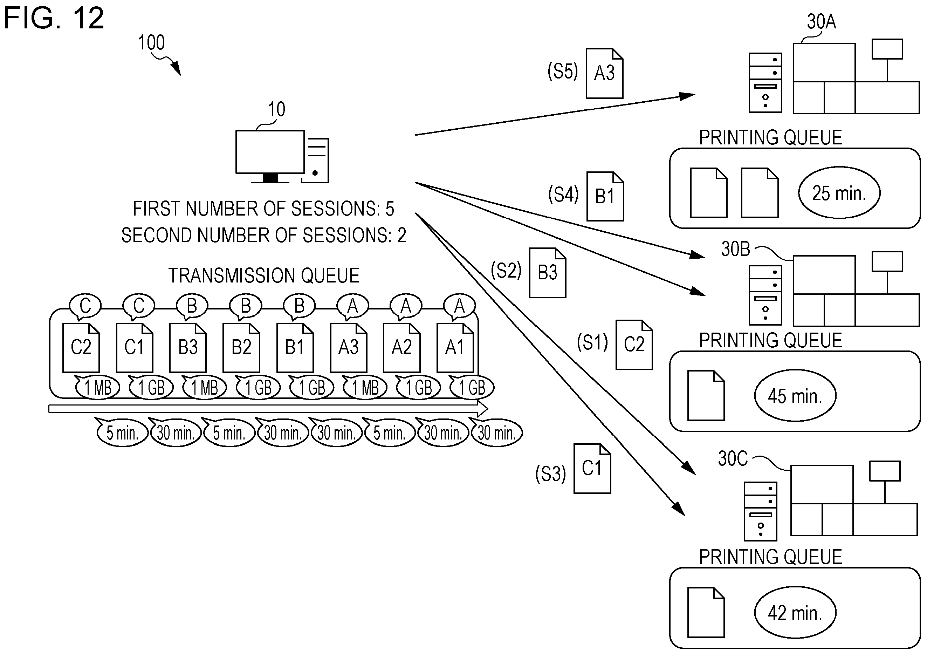

Next, in S5 in Fig. 12, the transmission section 11D transmits the first print job (here, the print job A3), whose data size is the smallest among print jobs (here, the print jobs A1, A2, and A3) associated with a printing apparatus whose estimated printing completion time after the update is the shortest (here, the printing apparatus 30A), to the associated printing apparatus (here, the printing apparatus 30A). The transmitted print job A3 is removed from the transmission queue.

The data analysis section 11C obtains 20 minutes, which is the estimated printing completion time of the printing apparatus 30A, and 5 minutes, which is the estimated printing completion time at a time when the printing apparatus 30A executes the print job A3, and updates the estimated printing completion time of the printing apparatus 30A by adding 5 minutes, which is the estimated printing completion time of the print job A3, to 20 minutes, which is the estimated printing completion time of the printing apparatus 30A. In an example illustrated in Fig. 12, the estimated printing completion time of the printing apparatus 30A is updated to 25 minutes, which is the sum of 20 minutes and 5 minutes. The estimated printing completion times after the update are 25 minutes for the printing apparatus 30A, 45 minutes for the printing apparatus 30B, and 42 minutes for the printing apparatus 30C. The third number of sessions of the printing apparatus 30A becomes 1. Here, since the number of transmission sessions for the printing apparatuses 30A to 30C becomes 5, that is, reaches the first number of sessions (upper limit), the information processing apparatus 10 can no longer set transmission sessions. In this case, the information processing apparatus 10 waits until the first transmission session, that is, the transmission session for the print job C2, ends.

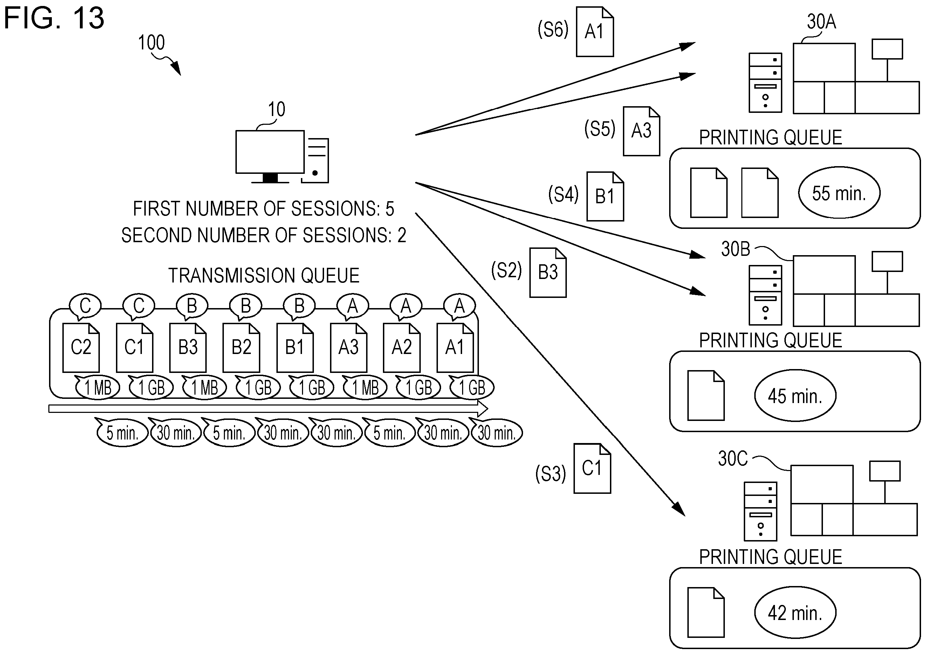

Next, in S6 in (Fig. 13, the transmission session for the print job C2 ends, and the number of transmission sessions becomes 4. The transmission section 11D transmits the first print job (here, the print job A1), whose data size is the smallest among print jobs (here, the print jobs A1 and A2) associated with a printing apparatus whose estimated printing completion time after the update is the shortest (here, the printing apparatus 30A), to the associated printing apparatus (here, the printing apparatus 30A). The transmitted print job A1 is removed from the transmission queue. Since the data size of the print jobs A1 and A2 is the same, the print job A2 may be selected, instead, but print jobs are selected in order of completion of transmission preparation here.

The data analysis section 11C obtains 25 minutes, which is the estimated printing completion time of the printing apparatus 30A, and 30 minutes, which is the estimated printing completion time at a time when the printing apparatus 30A executes the print job A1, and updates the estimated printing completion time of the printing apparatus 30A by adding 30 minutes, which is the estimated printing completion time of the print job A1, to 25 minutes, which is the estimated printing completion time of the printing apparatus 30A. In an example illustrated in Fig. 13, the estimated printing completion time of the printing apparatus 30A is updated to 55 minutes, which is the sum of 25 minutes and 30 minutes. The estimated printing completion times after the update are 55 minutes for the printing apparatus 30A, 45 minutes for the printing apparatus 30B, and 42 minutes for the printing apparatus 30C. The third number of sessions of the printing apparatus 30A becomes 2. That is, since the number of reception sessions of the printing apparatus 30A reaches the second number of sessions (upper limit), the printing apparatus 30A can no longer receive print jobs. In addition, since the number of transmission sessions for the printing apparatuses 30A to 30C becomes 5, that is, reaches the first number of sessions (upper limit), the information processing apparatus 10 can no longer set transmission sessions. In this case, the information processing apparatus 10 waits until the second transmission session, that is, the transmission session for the print job B3, ends.

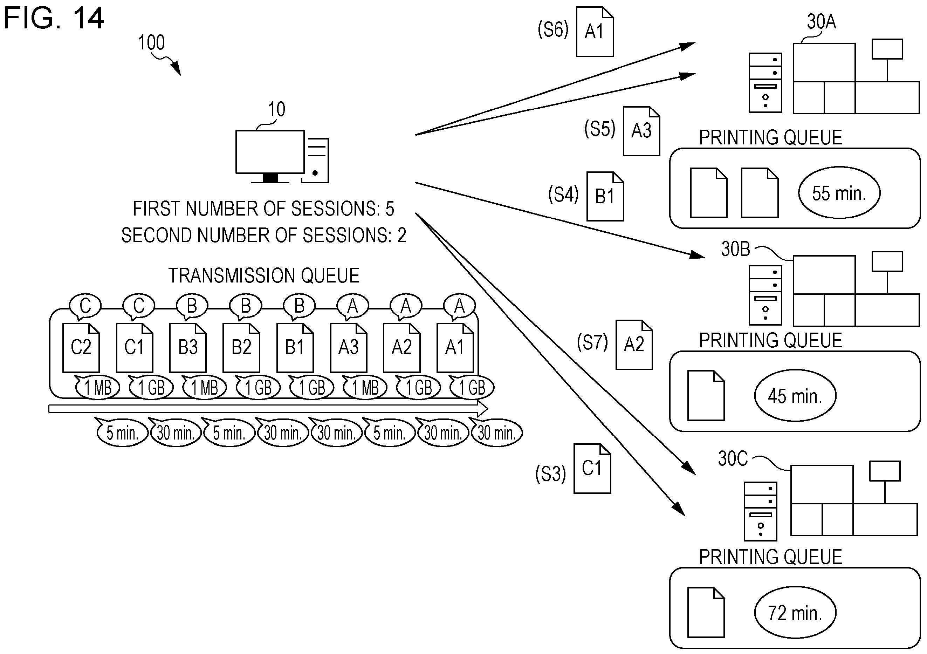

If no print job is associated with a printing apparatus 30 whose estimated printing completion time is the shortest, the first print job that is associated with another printing apparatus 30 and whose data size is the smallest may be transmitted. In S7 in Fig. 14, the transmission session for the print job B3 ends, and the number of transmission sessions becomes 4. The transmission section 11D transmits, for example, the first print job (here, the print job A2), whose data size is the smallest among print jobs to be transmitted (here, the print jobs A2 and B2), to a printing apparatus whose estimated printing completion time after the update is the shortest (here, the printing apparatus 30C). The printing apparatus 30C, however, has the same performance and the printing apparatus 30A or the printing apparatus 30B and can perform printing based on the print job A2 or B2. Since the print job A2 is associated with the printing apparatus 30A, the transmission section 11D may wait until the third number of sessions of the printing apparatus 30A becomes 1 and then transmit the print job A2 to the printing apparatus 30A. The transmitted print job A2 is removed from the transmission queue. Since the data size of the print jobs A2 and B2 is the same, the print job B2 may be selected, instead, but print jobs are selected in order of completion of transmission preparation here. If the print job B2 is selected, the print job B2 may be transmitted to the printing apparatus 30B.

The data analysis section 11C obtains 42 minutes, which is the estimated printing completion time of the printing apparatus 30C, and 30 minutes, which is the estimated printing completion time at a time when the printing apparatus 30C executes the print job A2, and updates the estimated printing completion time of the printing apparatus 30A by adding 30 minutes, which is the estimated printing completion time of the print job A2, to 42 minutes, which is the estimated printing completion time of the printing apparatus 30C. In an example illustrated in Fig. 14, the estimated printing completion time of the printing apparatus 30A is updated to 72 minutes, which is the sum of 42 minutes and 30 minutes. The printing completion times after the update are 55 minutes for the printing apparatus 30A, 45 minutes for the printing apparatus 30B, and 72 minutes for the printing apparatus 30C. The third number of sessions of the printing apparatus 30C becomes 2. That is, since the number of reception sessions of the printing apparatus 30C reaches the second number of sessions (upper limit), the printing apparatus 30C can no longer receive print jobs. In addition, since the number of transmission sessions for the printing apparatuses 30A to 30C becomes 5, that is, reaches the first number of sessions (upper limit), the information processing apparatus 10 can no longer set transmission sessions. In this case, the information processing apparatus 10 waits until the third transmission session, that is, the transmission session for the print job C1, ends.

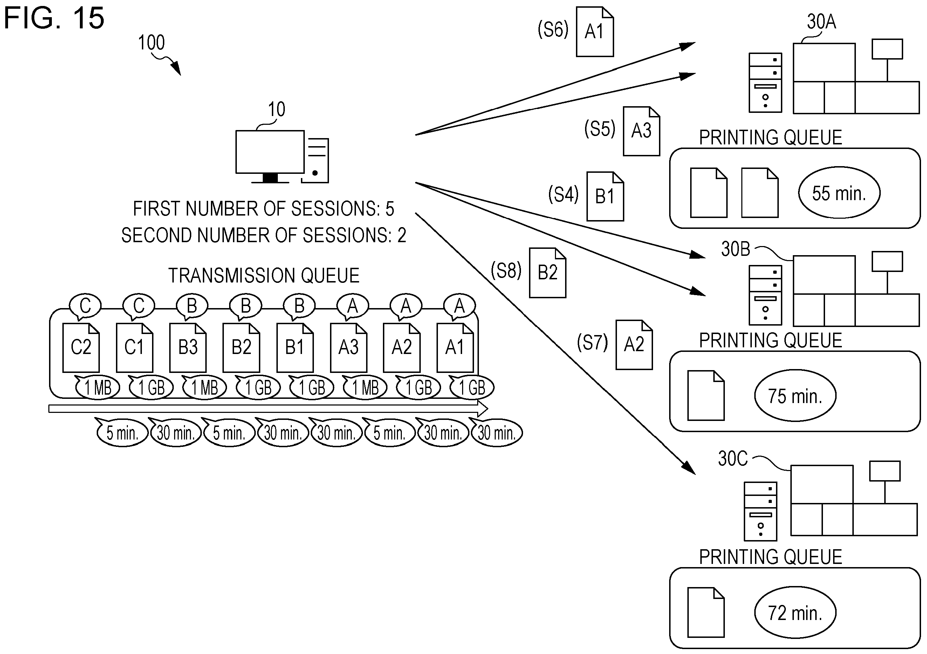

Next, in S8 in Fig. 15, the transmission session for the print job C1 ends, and the number of transmission sessions becomes 4. The transmission section 11D transmits a print job to be transmitted (here, the print job B2), to a printing apparatus whose estimated printing completion time after the update is the shortest (here, the printing apparatus 30B). The transmitted print job B2 is removed from the transmission queue.

The data analysis section 11C obtains 45 minutes, which is the estimated printing completion time of the printing apparatus 30B, and 30 minutes, which is the estimated printing completion time at a time when the printing apparatus 30B executes the print job B2, and updates the estimated printing completion time of the printing apparatus 30B by adding 30 minutes, which is the estimated printing completion time of the print job B2, to 45 minutes, which is the estimated printing completion time of the printing apparatus 30B. In an example illustrated in Fig. 15, the estimated printing completion time of the printing apparatus 30B is updated to 75 minutes, which is the sum of 45 minutes and 30 minutes. The estimated printing completion times after the update are 55 minutes for the printing apparatus 30A, 75 minutes for the printing apparatus 30B, and 72 minutes for the printing apparatus 30C.

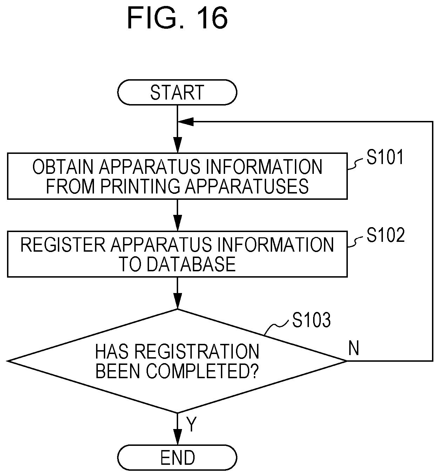

Next, operations performed by the printing system 100 according to the present exemplary embodiment will be described with reference to Figs. 16 to 19.

Fig. 16 is a flowchart illustrating an example of a process for registering apparatus information achieved by the printing program 15A according to the present exemplary embodiment.

First, the CPU 11 of the information processing apparatus 10 initiates the printing program 15A and performs the following steps.

In step S101 in Fig. 16, the CPU 11 obtains apparatus information from each of the printing apparatuses 30. As described above, the apparatus information is, for example, information including a status of the printing apparatus 30, the total number of pages of print jobs waiting to be executed, sheet size, and a PPM.

In step S102, the CPU 11 registers the apparatus information obtained in step S101 to the printing management database 151.

In step S103, the CPU 11 determines whether apparatus information has been registered to the printing management database 151 for all the printing apparatuses 30. If not (negative result), the CPU 11 returns to step S101 and repeats the process, and if so (positive result), the CPU 11 ends the process for registering apparatus information.

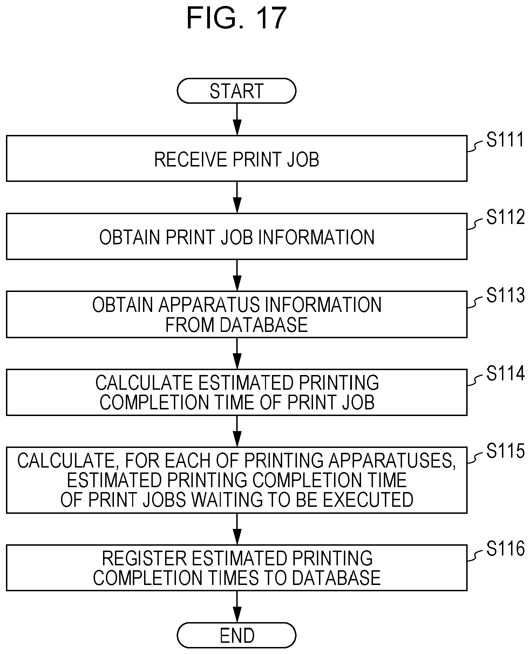

Fig. 17 is a flowchart illustrating an example of a process for calculating estimated printing completion time achieved by the printing program 15A according to the present exemplary embodiment.

First, the CPU 11 of the information processing apparatus 10 initiates the printing program 15A and performs the following steps.

In step S111 in Fig. 17, the CPU 11 receives a print job from a superior apparatus (not illustrated) and stores the received print job in a transmission queue.

In step S112, the CPU 11 obtains print job information from the print job stored in the transmission queue. The print job includes PDF data and JDF data, for example, as the print job information. The CPU 11 obtains the number of pages and data size from the PDF data and the number of copies, print sheet size, and information (an identification number etc.) regarding an associated printing apparatus from the JDF data.

In step S113, the CPU 11 obtains apparatus information regarding the printing apparatuses 30 from the printing management database 151.

In step S114, the CPU 11 calculates estimated printing completion time of the print job stored in the transmission queue, for example, using the above Expression (1).

In step S115, the CPU 11 calculates, for each of the printing apparatuses 30A to 30C using the above Expression (1), estimated printing completion time of print jobs waiting to be executed.

In step S116, the CPU 11 registers the estimated printing completion times calculated in steps S114 and S115 to the printing management database 151 and ends the process for calculating estimated printing completion time.

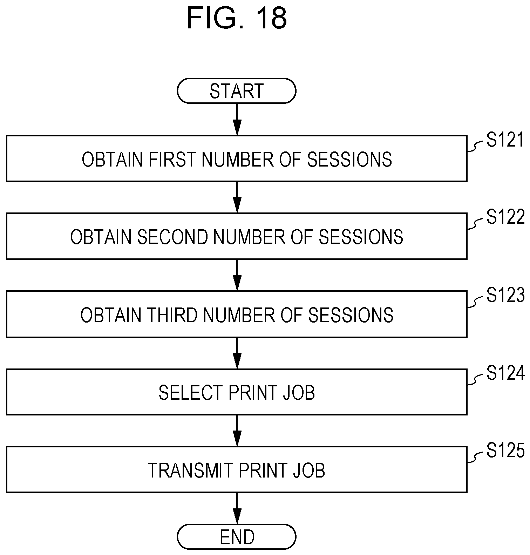

Fig. 18 is a flowchart illustrating an example of a process for transmitting a print job achieved by the printing program 15A according to the present exemplary embodiment.

First, the CPU 11 of the information processing apparatus 10 initiates the printing program 15A and performs the following steps.

In step S121 in Fig. 18, the CPU 11 obtains the first number of sessions from the printing management database 151. The first number of sessions indicates an upper limit to the number of sessions for simultaneously transmitting print jobs to the printing apparatuses 30A to 30C and corresponds to an upper limit to the number of transmission sessions.

In step S122, the CPU 11 obtains the second number of sessions from the printing management database 151. The second number of sessions indicates, for each of the printing apparatuses 30A to 30C, an upper limit to the number of sessions for simultaneously receiving print jobs and corresponds to an upper limit to the number of reception sessions.

In step S123, the CPU 11 obtains the third number of sessions. The third number of sessions indicates the number of sessions of each of the printing apparatuses 30A to 30C where the printing apparatus is communicating print jobs. The third number of sessions is a variable identified from the number of sessions (i.e., the number of print jobs) during communication performed by each printing apparatus.

EP 4 492 217 B1

In step S124, the CPU 11 selects, on the basis of the first number of sessions, the second number of sessions, and the third number of sessions obtained in steps S121 to S123, respectively, one of plural print jobs that have been received from a superior apparatus (not illustrated) and for which transmission preparation has been completed. That is, as illustrated in Figs. 7 to 15, for example, the CPU 11 determines which print job is to be transmitted to which printing apparatus 30.

In step S125, the CPU 11 transmits the print job selected in step S124 to one of the printing apparatuses 30A to 30C. That is, as illustrated in Figs. 7 to 15, for example, the CPU 11 sets a session for the determined printing apparatus 30, transmits the selected print job, and ends the process for transmitting a print job.

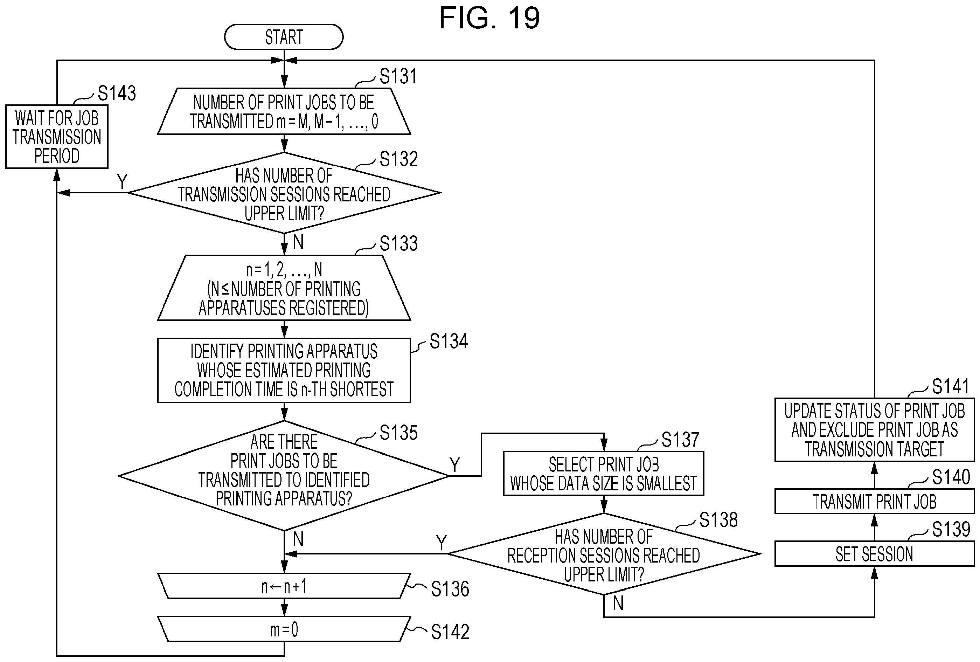

Fig. 19 is a flowchart illustrating another example of the process for transmitting a print job achieved by the printing program 15A according to the present exemplary embodiment. Fig. 19 is a flowchart for describing the flowchart of Fig. 18 more specifically.

First, the CPU 11 of the information processing apparatus 10 initiates the printing program 15A and performs the following steps.

In step S131 in Fig. 19, the CPU 11 sets, as illustrated in Fig. 7, for example, the number of print jobs to be transmitted (m = M, M - 1, ..., and 0) in a transmission queue at a maximum value "M". The first number of sessions and the second number of sessions are registered in the printing management database 151.

In step S132, the CPU 11 determines whether the number of transmission sessions has reached an upper limit (= the first number of sessions). If not (negative result), the CPU 11 proceeds to step S133, and if so (positive result), the CPU 11 proceeds to step S143.

In step S133, the CPU 11 sets n, which indicates estimated printing completion times of plural printing apparatuses 30 in ascending order (n = 1, 2, ..., and N; N ≤ the number of printing apparatuses registered), at 1. As illustrated in Fig. 7, for example, the estimated printing completion time is calculated for each of the printing apparatuses 30A to 30C and registered to the printing management database 151.

In step S134, the CPU 11 identifies a printing apparatus 30 whose estimated printing completion time is the n-th (n = 1) shortest. For example, the CPU 11 identifies the printing apparatus 30C illustrated in Fig. 8.

In step S135, the CPU 11 determines whether there are print jobs to be transmitted to the printing apparatus 30 identified in step S134. If not (negative result), the CPU 11 proceeds to step S136, and if so, (positive result), the CPU 11 proceeds to step S137.

In step S136, the CPU 11 increments n by 1, returns to step S133, and repeats the process.

In step S137, on the other hand, the CPU 11 selects, from among the print jobs associated with the printing apparatus 30 identified in step S134, a print job whose data size is the smallest. For example, the CPU 11 selects the print job C2 illustrated in Fig. 8.

In step S138, the CPU 11 determines whether the number of reception sessions has reached an upper limit (= the second number of sessions). If not (negative result), the CPU 11 proceeds to step S139, and if so (positive result), the CPU 11 proceeds to step S136.

In step S139, the CPU 11 sets a session for the printing apparatus 30 identified in step S134. For example, the CPU 11 sets a session for the printing apparatus 30C illustrated in Fig. 8.

In step S140, the CPU 11 transmits the print job to the printing apparatus 30 for which a session has been set in step S139. For example, the CPU 11 transmits the print job C2 illustrated in Fig. 8 to the printing apparatus 30C.

In step S141, the CPU 11 updates a status of the print job transmitted in step S140, excludes the print job as a transmission target, that is, removes the print job from the transmission queue, returns to step S131, and repeats the process. In step S131, the CPU 11 sets the number of print jobs to be transmitted (m = M, M - 1, ..., and 0) at M - 1 and repeats the process.

In step S142, the CPU 11 repeats the process from step S131 to step S141 until the number of print jobs to be transmitted (m = M, M - 1, ..., and 0) becomes 0 and when the number of print jobs to be transmitted has become 0, proceeds to step S143.

In step S143, the CPU 11 waits for a job transmission period, which is a period over which a print job is transmitted, returns to step S131, and repeats the process.

According to the present exemplary embodiment, print jobs can be efficiently transmitted to printing apparatuses by taking into consideration an upper limit to the number of transmission sessions in addition to an upper limit to the number of reception sessions.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

A printing system according to an exemplary embodiment has been described. In another exemplary embodiment, a program for causing a computer to achieve the functions of the components of the printing system may be employed. In another exemplary embodiment, a non-transitory computer readable medium storing the program may be employed.

In addition, the configuration of the printing system described in the above exemplary embodiment is an example, and may be modified depending on a situation insofar as the scope of the present disclosure is not deviated from. For the avoidance of doubt, the scope of the invention is defined by the appended claims.

In addition, the processes achieved by the program described in the above exemplary embodiment are examples, and unnecessary steps may be removed, new steps may be added, or order of processing may be changed insofar as the scope of the present disclosure is not deviated from. For the avoidance of doubt, the scope of the invention is defined by the appended claims.

In addition, although a case where the processes according to the exemplary embodiment are achieved with a software configuration using a computer by executing a program has been described in the above exemplary embodiment, the processes need not necessarily be achieved with a software configuration. The processes according to the exemplary embodiment may be achieved, for example, by a hardware configuration or a combination of a hardware configuration and a software configuration, instead.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims.

**Claims**

1. A printing system (100) comprising:
   a processor (10) configured to:

   obtain a first number of sessions, which indicates an upper limit to a number of sessions for simultaneously transmitting print jobs to a plurality of printing apparatuses (30);
   obtain a second number of sessions, which indicates an upper limit to a number of sessions of each of the plurality of printing apparatuses (30) for simultaneously receiving print jobs;
   obtain a third number of sessions, which indicates a number of sessions of each of the plurality of printing apparatus (30) where the printing apparatus is communicating print jobs;
   select, on a basis of the first number of sessions, the second number of sessions, and the third number of sessions, one of a plurality of print jobs for which transmission preparation has been completed; and
   transmit the selected print job to one of the plurality of printing apparatuses (30),
   **characterised in that**:

   the processor (10) is configured to obtain estimated printing completion time, which is estimated time taken to complete printing based on print jobs waiting to be executed, for each of the plurality of printing apparatuses (30), and
   the processor (10) is configured to preferentially transmit the selected print job to a printing apparatus whose estimated printing completion time is the shortest among printing apparatuses (30) whose third number of sessions is smaller than the second number of sessions.

2. The printing system (100) according to claim 1,
   wherein the processor (10) is configured to update the estimated printing completion time of each of the plurality of printing apparatuses (30) in accordance with changes in the third number of sessions.

3. The printing system (100) according to claim 2,
   wherein a total number of sessions that is a sum of the third number of sessions of the plurality of printing apparatuses (30) is smaller than or equal to the first number of sessions.

4. The printing system (100) according to any one of claims 1 to 3,
   wherein the processor (10) is configured to select a first print job, which is a job whose data size is the smallest.

**5.** The printing system (100) according to claim 4,

    wherein each of the plurality of print jobs is associated in advance with one of the plurality of printing apparatuses (30), and

    wherein the processor (10) is configured to transmit the first print job, whose data size is the smallest among print jobs associated with a printing apparatus whose estimated printing completion time is the shortest, to the associated printing apparatus.

**6.** The printing system (100) according to claim 5,

    wherein the processor (10) is configured to obtain the estimated printing completion time of the printing apparatus associated with the first print job,

    wherein the processor (10) is configured to obtain estimated printing completion time at a time when the associated printing apparatus executes the first print job, and

    wherein the processor (10) is configured to add the estimated printing completion time of the first print job to the estimated printing completion time of the associated printing apparatus and update the estimated printing completion time of the associated printing apparatus.

**7.** The printing system (100) according to claim 6,

    wherein the processor (10) is configured to obtain, after the update of the estimated printing completion time, the estimated printing completion time for each of the plurality of printing apparatuses (30), and

    wherein the processor (10) is configured to transmit a first print job, whose data size is the smallest among print jobs associated with a printing apparatus whose estimated printing completion time is the shortest among printing apparatuses whose third number of sessions is smaller than the second number of sessions.

**8.** The printing system (100) according to claim 7,
wherein the processor (10) is configured to transmit, if no print job is associated with the printing apparatus whose estimated printing completion time is the shortest, a first print job that is associated with another printing apparatus and whose data size is the smallest.

**9.** The printing system (100) according to any one of claims 1 to 8,
wherein the processor (10) is configured to detect a status of each of the plurality of printing apparatuses (30) and exclude a printing apparatus whose status indicates an error as a candidate to which a print job is to be transmitted.

**10.** A program (15A) causing a computer to execute a printing process comprising:

    obtaining a first number of sessions, which indicates an upper limit to a number of sessions for simultaneously transmitting print jobs to a plurality of printing apparatuses (30);

    obtaining a second number of sessions, which indicates an upper limit to a number of sessions of each of the plurality of printing apparatuses (30) for simultaneously receiving print jobs;

    obtaining a third number of sessions, which indicates a number of sessions of each of the plurality of printing apparatus (30) where the printing apparatus is communicating print jobs;

    selecting, on a basis of the first number of sessions, the second number of sessions, and the third number of sessions, one of a plurality of print jobs for which transmission preparation has been completed; and

    transmitting the selected print job to one of the plurality of printing apparatuses (30),

    **characterised in that** the printing process further comprises:

    obtaining estimated printing completion time, which is estimated time taken to complete printing based on print jobs waiting to be executed, for each of the plurality of printing apparatuses (30), and

    preferentially transmitting the selected print job to a printing apparatus whose estimated printing completion time is the shortest among printing apparatuses (30) whose third number of sessions is smaller than the second number of sessions.

**11.** A printing method comprising:

    obtaining a first number of sessions, which indicates an upper limit to a number of sessions for simultaneously transmitting print jobs to a plurality of printing apparatuses (30);

obtaining a second number of sessions, which indicates an upper limit to a number of sessions of each of the plurality of printing apparatuses (30) for simultaneously receiving print jobs;

obtaining a third number of sessions, which indicates a number of sessions of each of the plurality of printing apparatus (30) where the printing apparatus is communicating print jobs;

selecting, on a basis of the first number of sessions, the second number of sessions, and the third number of sessions, one of a plurality of print jobs for which transmission preparation has been completed; and

transmitting the selected print job to one of the plurality of printing apparatuses (30),

**characterised in that** the printing method further comprises:

obtaining estimated printing completion time, which is estimated time taken to complete printing based on print jobs waiting to be executed, for each of the plurality of printing apparatuses (30), and

preferentially transmitting the selected print job to a printing apparatus whose estimated printing completion time is the shortest among printing apparatuses (30) whose third number of sessions is smaller than the second number of sessions.

**Patentansprüche**

1. Drucksystem (100), umfassend:

   einen Prozessor (10), der so konfiguriert ist, dass er:

   eine erste Anzahl von Sitzungen, die eine Obergrenze für eine Anzahl von Sitzungen zum gleichzeitigen Übertragen von Druckaufträgen an mehrere Druckvorrichtungen (30) angibt, erhält;

   eine zweite Anzahl von Sitzungen, die eine Obergrenze für eine Anzahl von Sitzungen jeder der mehreren Druckvorrichtungen (30) zum gleichzeitigen Empfangen von Druckaufträgen angibt, erhält;

   eine dritte Anzahl von Sitzungen, die eine Anzahl von Sitzungen jeder der mehreren Druckvorrichtungen (30), in denen die Druckvorrichtung Druckaufträge kommuniziert, angibt, erhält;

   auf der Grundlage der ersten Anzahl von Sitzungen, der zweiten Anzahl von Sitzungen und der dritten Anzahl von Sitzungen, eines von mehreren Druckaufträgen, für den Übertragungsvorbereitung abgeschlossen worden ist, auswählt; und

   den ausgewählten Druckauftrag an eine der mehreren Druckvorrichtungen (30) überträgt,

   **dadurch gekennzeichnet, dass**:

   der Prozessor (10) so konfiguriert ist, dass er geschätzte Druckabschlusszeit, die geschätzte Zeit ist, die zum Abschließen von Drucken auf der Grundlage von Druckaufträgen, die darauf warten, ausgeführt zu werden, benötigt wird, für jede der mehreren Druckvorrichtungen (30) erhält, und

   der Prozessor (10) so konfiguriert ist, dass er den ausgewählten Druckauftrag bevorzugt an eine Druckvorrichtung, deren geschätzte Druckabschlusszeit die kürzeste unter Druckvorrichtungen (30) ist, deren dritte Anzahl von Sitzungen kleiner als die zweite Anzahl von Sitzungen ist, überträgt.

2. Drucksystem (100) nach Anspruch 1,
   wobei der Prozessor (10) so konfiguriert ist, dass er die geschätzte Druckabschlusszeit jeder der mehreren Druckvorrichtungen (30) in Übereinstimmung mit Änderungen der dritten Anzahl von Sitzungen aktualisiert.

3. Drucksystem (100) nach Anspruch 2,
   wobei eine Gesamtanzahl von Sitzungen, die eine Summe der dritten Anzahl von Sitzungen der mehreren Druckvorrichtungen (30) ist, kleiner oder gleich der ersten Anzahl von Sitzungen ist.

4. Drucksystem (100) nach einem der Ansprüche 1 bis 3,
   wobei der Prozessor (10) so konfiguriert ist, dass er einen ersten Druckauftrag, der ein Auftrag ist, dessen Datengröße die kleinste ist, auswählt.

5. Drucksystem (100) nach Anspruch 4,

   wobei jeder der mehreren Druckaufträge im Voraus einer der mehreren Druckvorrichtungen (30) zugeordnet ist, und

   wobei der Prozessor (10) so konfiguriert ist, dass er den ersten Druckauftrag, dessen Datengröße die kleinste unter Druckaufträgen ist, die einer Druckvorrichtung zugeordnet sind, deren geschätzte Druckabschlusszeit die kürzeste ist, an die zugeordnete Druckvorrichtung überträgt.

6. Drucksystem (100) nach Anspruch 5,

wobei der Prozessor (10) so konfiguriert ist, dass er die geschätzte Druckabschlusszeit der Druckvorrichtung, die dem ersten Druckauftrag zugeordnet ist, erhält,
wobei der Prozessor (10) so konfiguriert ist, dass er geschätzte Druckabschlusszeit zu einem Zeitpunkt erhält, zu dem die zugeordnete Druckvorrichtung den ersten Druckauftrag ausführt, und
wobei der Prozessor (10) so konfiguriert ist, dass er die geschätzte Druckabschlusszeit des ersten Druckauftrags zu der geschätzten Druckabschlusszeit der zugeordneten Druckvorrichtung addiert und die geschätzte Druckabschlusszeit der zugeordneten Druckvorrichtung aktualisiert.

7. Drucksystem (100) nach Anspruch 6,

wobei der Prozessor (10) so konfiguriert ist, dass er, nach der Aktualisierung der geschätzten Druckabschlusszeit, die geschätzte Druckabschlusszeit für jede der mehreren Druckvorrichtungen (30) erhält, und
wobei der Prozessor (10) so konfiguriert ist, dass er einen ersten Druckauftrag, dessen Datengröße die kleinste unter Druckaufträgen ist, die einer Druckvorrichtung zugeordnet sind, deren geschätzte Druckabschlusszeit die kürzeste unter Druckvorrichtungen ist, deren dritte Anzahl von Sitzungen kleiner als die zweite Anzahl von Sitzungen ist, überträgt.

8. Drucksystem (100) nach Anspruch 7,
wobei der Prozessor (10) so konfiguriert ist, dass er, wenn kein Druckauftrag der Druckvorrichtung, deren geschätzte Druckabschlusszeit die kürzeste ist, zugeordnet ist, einen ersten Druckauftrag, der einer anderen Druckvorrichtung zugeordnet ist und dessen Datengröße die kleinste ist, überträgt.

9. Drucksystem (100) nach einem der Ansprüche 1 bis 8,
wobei der Prozessor (10) so konfiguriert ist, dass er einen Status jeder der mehreren Druckvorrichtungen (30) detektiert und eine Druckvorrichtung, deren Status einen Fehler angibt, als einen Kandidaten, an den ein Druckauftrag zu übertragen ist, ausschließt.

10. Programm (15A), das einen Computer veranlasst, einen Druckprozess auszuführen, das umfasst:

Erhalten einer ersten Anzahl von Sitzungen, die eine Obergrenze für eine Anzahl von Sitzungen zum gleichzeitigen Übertragen von Druckaufträgen an mehrere Druckvorrichtungen (30) angibt;
Erhalten einer zweiten Anzahl von Sitzungen, die eine Obergrenze für eine Anzahl von Sitzungen jeder der mehreren Druckvorrichtungen (30) zum gleichzeitigen Empfangen von Druckaufträgen angibt;
Erhalten einer dritten Anzahl von Sitzungen, die eine Anzahl von Sitzungen jeder der mehreren Druckvorrichtungen (30), in denen die Druckvorrichtung Druckaufträge kommuniziert, angibt;
Auswählen, auf der Grundlage der ersten Anzahl von Sitzungen, der zweiten Anzahl von Sitzungen und der dritten Anzahl von Sitzungen, eines von mehreren Druckaufträgen, für den Übertragungsvorbereitung abgeschlossen worden ist; und
Übertragen des ausgewählten Druckauftrags an eine der mehreren Druckvorrichtungen (30),
**dadurch gekennzeichnet, dass** der Druckprozess ferner umfasst:

Erhalten von geschätzter Druckabschlusszeit, die geschätzte Zeit ist, die zum Abschließen von Drucken auf der Grundlage von Druckaufträgen, die darauf warten, ausgeführt zu werden, benötigt wird, für jede der mehreren Druckvorrichtungen (30), und
bevorzugtes Übertragen des ausgewählten Druckauftrags an eine Druckvorrichtung, deren geschätzte Druckabschlusszeit die kürzeste unter Druckvorrichtungen (30) ist, deren dritte Anzahl von Sitzungen kleiner als die zweite Anzahl von Sitzungen ist.

11. Druckverfahren, umfassend:

Erhalten einer ersten Anzahl von Sitzungen, die eine Obergrenze für eine Anzahl von Sitzungen zum gleichzeitigen Übertragen von Druckaufträgen an mehrere Druckvorrichtungen (30) angibt;
Erhalten einer zweiten Anzahl von Sitzungen, die eine Obergrenze für eine Anzahl von Sitzungen jeder der mehreren Druckvorrichtungen (30) zum gleichzeitigen Empfangen von Druckaufträgen angibt;

Erhalten einer dritten Anzahl von Sitzungen, die eine Anzahl von Sitzungen jeder der mehreren Druckvorrichtungen (30), in denen die Druckvorrichtung Druckaufträge kommuniziert, angibt;

Auswählen, auf der Grundlage der ersten Anzahl von Sitzungen, der zweiten Anzahl von Sitzungen und der dritten Anzahl von Sitzungen, eines von mehreren Druckaufträgen, für den Übertragungsvorbereitung abgeschlossen worden ist; und

Übertragen des ausgewählten Druckauftrags an eine der mehreren Druckvorrichtungen (30),

**dadurch gekennzeichnet, dass** das Druckverfahren ferner umfasst:

Erhalten von geschätzter Druckabschlusszeit, die geschätzte Zeit ist, die zum Abschließen von Drucken auf der Grundlage von Druckaufträgen, die darauf warten, ausgeführt zu werden, benötigt wird, für jede der mehreren Druckvorrichtungen (30), und

bevorzugtes Übertragen des ausgewählten Druckauftrags an eine Druckvorrichtung, deren geschätzte Druckabschlusszeit die kürzeste unter Druckvorrichtungen (30) ist, deren dritte Anzahl von Sitzungen kleiner als die zweite Anzahl von Sitzungen ist.

## Revendications

1. Système d'impression (100) comprenant :
   un processeur (10) configuré pour :

   obtenir un premier nombre de sessions, qui indique une limite supérieure à un nombre de sessions pour transmettre simultanément des travaux d'impression à une pluralité d'appareils d'impression (30) ;

   obtenir un deuxième nombre de sessions, qui indique une limite supérieure à un nombre de sessions de chacun de la pluralité d'appareils d'impression (30) pour recevoir simultanément des travaux d'impression ;

   obtenir un troisième nombre de sessions, qui indique un nombre de sessions de chacun de la pluralité d'appareils d'impression (30) où l'appareil d'impression communique des travaux d'impression ;

   sélectionner, sur la base du premier nombre de sessions, du deuxième nombre de sessions et du troisième nombre de sessions, l'un d'une pluralité de travaux d'impression pour lesquels la préparation de transmission a été complétée ; et

   transmettre le travail d'impression sélectionné à l'un de la pluralité d'appareils d'impression (30),

   **caractérisé en ce que** :

   le processeur (10) est configuré pour obtenir un temps estimé d'achèvement d'impression, qui est un temps estimé nécessaire pour achever l'impression sur la base des travaux d'impression en attente d'exécution, pour chacun de la pluralité d'appareils d'impression (30), et

   le processeur (10) est configuré pour transmettre de manière préférentielle le travail d'impression sélectionné à un appareil d'impression dont le temps estimé d'achèvement d'impression est le plus court parmi des appareils d'impression (30) dont le troisième nombre de sessions est inférieur au deuxième nombre de sessions.

2. Système d'impression (100) selon la revendication 1,
   dans lequel le processeur (10) est configuré pour mettre à jour le temps estimé d'achèvement d'impression de chacun de la pluralité d'appareils d'impression (30) en fonction des changements du troisième nombre de sessions.

3. Système d'impression (100) selon la revendication 2,
   dans lequel un nombre total de sessions qui est une somme du troisième nombre de sessions de la pluralité d'appareils d'impression (30) est inférieur ou égal au premier nombre de sessions.

4. Système d'impression (100) selon l'une quelconque des revendications 1 à 3,
   dans lequel le processeur (10) est configuré pour sélectionner un premier travail d'impression, qui est un travail dont la taille de données est la plus petite.

5. Système d'impression (100) selon la revendication 4,

   dans lequel chacun de la pluralité de travaux d'impression est associé à l'avance à l'un de la pluralité d'appareils d'impression (30), et

   dans lequel le processeur (10) est configuré pour transmettre le premier travail d'impression, dont la taille de données est la plus petite parmi les travaux d'impression associés à un appareil d'impression dont le temps estimé d'achèvement d'impression est le plus court, à l'appareil d'impression associé.

6. Système d'impression (100) selon la revendication 5,

dans lequel le processeur (10) est configuré pour obtenir le temps estimé d'achèvement d'impression de l'appareil d'impression associé au premier travail d'impression,
dans lequel le processeur (10) est configuré pour obtenir un temps estimé d'achèvement d'impression à un moment où l'appareil d'impression associé exécute le premier travail d'impression, et
dans lequel le processeur (10) est configuré pour ajouter le temps estimé d'achèvement d'impression du premier travail d'impression au temps estimé d'achèvement d'impression de l'appareil d'impression associé et pour mettre à jour le temps estimé d'achèvement d'impression de l'appareil d'impression associé.

7. Système d'impression (100) selon la revendication 6,

dans lequel le processeur (10) est configuré pour obtenir, après la mise à jour du temps estimé d'achèvement d'impression, le temps estimé d'achèvement d'impression pour chacun de la pluralité d'appareils d'impression (30), et
dans lequel le processeur (10) est configuré pour transmettre un premier travail d'impression, dont la taille de données est la plus petite parmi des travaux d'impression associés à un appareil d'impression dont le temps estimé d'achèvement d'impression est le plus court parmi des appareils d'impression dont le troisième nombre de sessions est inférieur au deuxième nombre de sessions.

8. Système d'impression (100) selon la revendication 7,
dans lequel le processeur (10) est configuré pour transmettre, si aucun travail d'impression n'est associé à l'appareil d'impression dont le temps estimé d'achèvement d'impression est le plus court, un premier travail d'impression qui est associé à un autre appareil d'impression et dont la taille de données est la plus petite.

9. Système d'impression (100) selon l'une quelconque des revendications 1 à 8,
dans lequel le processeur (10) est configuré pour détecter un état de chacun de la pluralité d'appareils d'impression (30) et pour exclure un appareil d'impression dont l'état indique une erreur comme candidat auquel un travail d'impression doit être transmis.

10. Programme (15A) amenant un ordinateur à exécuter un processus d'impression comprenant :

obtenir un premier nombre de sessions, qui indique une limite supérieure à un nombre de sessions pour transmettre simultanément des travaux d'impression à une pluralité d'appareils d'impression (30) ;
obtenir un deuxième nombre de sessions, qui indique une limite supérieure à un nombre de sessions de chacun de la pluralité d'appareils d'impression (30) pour recevoir simultanément des travaux d'impression ;
obtenir un troisième nombre de sessions, qui indique un nombre de sessions de chacun de la pluralité d'appareils d'impression (30) où l'appareil d'impression communique des travaux d'impression ;
sélectionner, sur la base du premier nombre de sessions, du deuxième nombre de sessions et du troisième nombre de sessions, l'un d'une pluralité de travaux d'impression pour lesquels la préparation de transmission a été complétée ; et
transmettre le travail d'impression sélectionné à l'un de la pluralité d'appareils d'impression (30),
**caractérisé en ce que** le processus d'impression comprend en outre :

obtenir un temps estimé d'achèvement d'impression, qui est un temps estimé nécessaire pour achever l'impression sur la base des travaux d'impression en attente d'exécution, pour chacun de la pluralité d'appareils d'impression (30), et
transmettre de manière préférentielle le travail d'impression sélectionné à un appareil d'impression dont le temps estimé d'achèvement d'impression est le plus court parmi des appareils d'impression (30) dont le troisième nombre de sessions est inférieur au deuxième nombre de sessions.

11. Procédé d'impression comprenant :

obtenir un premier nombre de sessions, qui indique une limite supérieure à un nombre de sessions pour transmettre simultanément des travaux d'impression à une pluralité d'appareils d'impression (30) ;

obtenir un deuxième nombre de sessions, qui indique une limite supérieure à un nombre de sessions de chacun de la pluralité d'appareils d'impression (30) pour recevoir simultanément des travaux d'impression ;
obtenir un troisième nombre de sessions, qui indique un nombre de sessions de chacun de la pluralité d'appareils d'impression (30) où l'appareil d'impression communique des travaux d'impression ;
sélectionner, sur la base du premier nombre de sessions, du deuxième nombre de sessions et du troisième nombre de sessions, l'un d'une pluralité de travaux d'impression pour lesquels la préparation de transmission a été complétée ; et
transmettre le travail d'impression sélectionné à l'un de la pluralité d'appareils d'impression (30),
**caractérisé en ce que** le procédé d'impression comprend en outre :

obtenir un temps estimé d'achèvement d'impression, qui est un temps estimé nécessaire pour achever l'impression sur la base des travaux d'impression en attente d'exécution, pour chacun de la pluralité d'appareils d'impression (30), et
transmettre de manière préférentielle le travail d'impression sélectionné à un appareil d'impression dont le temps estimé d'achèvement d'impression est le plus court parmi des appareils d'impression (30) dont le troisième nombre de sessions est inférieur au deuxième nombre de sessions.

# FIG. 1

INFORMATION
PROCESSING
APPARATUS

10

100

N

PRINTING
APPARATUS

30A

PRINTING
APPARATUS

30B

PRINTING
APPARATUS

30C

# FIG. 2

INFORMATION PROCESSING APPARATUS 10

| | |
|---|---|
| CPU 11 | |
| ROM 12 | I/O 14 |
| RAM 13 | |

STORAGE UNIT 15

PRINTING PROGRAM 15A

DISPLAY UNIT 16

OPERATION UNIT 17

COMMUNICATION UNIT 18

# FIG. 3

30

PRINTING APPARATUS

31
CPU

32
ROM

33
RAM

34

I/O

35
STORAGE UNIT

36
DISPLAY UNIT

37
OPERATION UNIT

38
DOCUMENT READING UNIT

39
IMAGE FORMING UNIT

40
COMMUNICATION UNIT

# FIG. 4

200

210

UPPER LIMIT TO NUMBER
OF RECEPTION SESSIONS: 2

TRANSMISSION QUEUE

| C | C | B | B | B | A | A | A |
| C2 | C1 | B3 | B2 | B1 | A3 | A2 | A1 |

A1

A2

B1

B2

C1

220A

220B

220C

EP 4 492 217 B1

# FIG. 5

24

# FIG. 6

THIRD NUMBER
OF SESSIONS
($\leq$ SECOND NUMBER
OF SESSIONS)

30A

THIRD NUMBER
OF SESSIONS
($\leq$ SECOND NUMBER
OF SESSIONS)

30B

THIRD NUMBER
OF SESSIONS
($\leq$ SECOND NUMBER
OF SESSIONS)

30C

100

10

FIRST NUMBER OF SESSIONS: 5
SECOND NUMBER OF SESSIONS: 2

# FIG. 7

# FIG. 8

EP 4 492 217 B1

# FIG. 9

100

10

FIRST NUMBER OF SESSIONS: 5
SECOND NUMBER OF SESSIONS: 2

TRANSMISSION QUEUE

| C | C | B | B | B | A | A | A |
| C2 | C1 | B3 | B2 | B1 | A3 | A2 | A1 |
| 1 MB | 1 GB | 1 MB | 1 GB | 1 GB | 1 MB | 1 GB | 1 GB |
| 5 min. | 30 min. | 5 min. | 30 min. | 30 min. | 5 min. | 30 min. | 30 min. |

(S2) B3

(S1) C2

30A

PRINTING QUEUE

20 min.

30B

PRINTING QUEUE

15 min.

30C

PRINTING QUEUE

12 min.

EP 4 492 217 B1

FIG. 10

100

10

FIRST NUMBER OF SESSIONS: 5
SECOND NUMBER OF SESSIONS: 2

TRANSMISSION QUEUE

| C | C | B | B | B | A | A | A |
|---|---|---|---|---|---|---|---|
| C2 | C1 | B3 | B2 | B1 | A3 | A2 | A1 |
| 1 MB | 1 GB | 1 MB | 1 GB | 1 GB | 1 MB | 1 GB | 1 GB |
| 5 min. | 30 min. | 5 min. | 30 min. | 30 min. | 5 min. | 30 min. | 30 min. |

(S2) B3

(S1) C2

(S3) C1

30A

PRINTING QUEUE

20 min.

30B

PRINTING QUEUE

15 min.

30C

PRINTING QUEUE

42 min.

EP 4 492 217 B1

# FIG. 11

100

10

FIRST NUMBER OF SESSIONS: 5
SECOND NUMBER OF SESSIONS: 2

TRANSMISSION QUEUE

| C | C | B | B | B | A | A | A |
| C2 | C1 | B3 | B2 | B1 | A3 | A2 | A1 |
| 1 MB | 1 GB | 1 MB | 1 GB | 1 GB | 1 MB | 1 GB | 1 GB |
| 5 min. | 30 min. | 5 min. | 30 min. | 30 min. | 5 min. | 30 min. | 30 min. |

30A

PRINTING QUEUE

(S4) B1

20 min.

30B

(S2) B3

PRINTING QUEUE

(S1) C2

45 min.

30C

(S3) C1

PRINTING QUEUE

42 min.

EP 4 492 217 B1

# FIG. 12

100

10

FIRST NUMBER OF SESSIONS: 5
SECOND NUMBER OF SESSIONS: 2

TRANSMISSION QUEUE

| C | C | B | B | B | A | A | A |
|---|---|---|---|---|---|---|---|
| C2 | C1 | B3 | B2 | B1 | A3 | A2 | A1 |
| 1 MB | 1 GB | 1 MB | 1 GB | 1 GB | 1 MB | 1 GB | 1 GB |
| 5 min. | 30 min. | 5 min. | 30 min. | 30 min. | 5 min. | 30 min. | 30 min. |

(S5) A3

30A

PRINTING QUEUE

25 min.

(S4) B1

30B

(S2) B3

PRINTING QUEUE

45 min.

(S1) C2

(S3) C1

30C

PRINTING QUEUE

42 min.

EP 4 492 217 B1

# FIG. 13

100

10

FIRST NUMBER OF SESSIONS: 5
SECOND NUMBER OF SESSIONS: 2

TRANSMISSION QUEUE

| (A) A1 ~1GB 30 min. | (A) A2 ~1GB 30 min. | (A) A3 ~1MB 5 min. | (B) B1 ~1GB 30 min. | (B) B2 ~1GB 30 min. | (B) B3 ~1MB 5 min. | (C) C1 ~1GB 30 min. | (C) C2 ~1MB 5 min. |

(S6) A1
(S5) A3
(S4) B1
(S2) B3
(S3) C1

30A — PRINTING QUEUE — 55 min.
30B — PRINTING QUEUE — 45 min.
30C — PRINTING QUEUE — 42 min.

EP 4 492 217 B1

# FIG. 14

FIG. 15

100

10

FIRST NUMBER OF SESSIONS: 5
SECOND NUMBER OF SESSIONS: 2

TRANSMISSION QUEUE

| C | C | B | B | B | A | A | A |
| C2 | C1 | B3 | B2 | B1 | A3 | A2 | A1 |
| 1MB | 1GB | 1MB | 1GB | 1GB | 1MB | 1GB | 1GB |
| 5 min. | 30 min. | 30 min. | 5 min. | 30 min. | 30 min. | 5 min. | 30 min. | 30 min. |

30A

(S6) A1
(S5) A3
(S4) B1
(S8) B2
(S7) A2

30B

30C

PRINTING QUEUE
55 min.

PRINTING QUEUE
75 min.

PRINTING QUEUE
72 min.

# FIG. 16

```
          ┌──────────────┐
          │    START     │
          └──────────────┘
                 │
                 ▼
  ┌─────────────────────────────────┐
  │  OBTAIN APPARATUS INFORMATION   │──── S101
  │    FROM PRINTING APPARATUSES    │
  └─────────────────────────────────┘
                 │
                 ▼
  ┌─────────────────────────────────┐
  │  REGISTER APPARATUS INFORMATION │──── S102
  │          TO DATABASE            │
  └─────────────────────────────────┘
                 │
                 ▼
            ╱─────────╲               S103
           ╱           ╲
          ╱  HAS        ╲   N
          ╲  REGISTRATION╱ ─────►
           ╲ BEEN       ╱
            ╲COMPLETED?╱
             ╲───────╱
                 │ Y
                 ▼
          ┌──────────────┐
          │     END      │
          └──────────────┘
```

# FIG. 17

START

RECEIVE PRINT JOB — S111

OBTAIN PRINT JOB INFORMATION — S112

OBTAIN APPARATUS INFORMATION FROM DATABASE — S113

CALCULATE ESTIMATED PRINTING COMPLETION TIME OF PRINT JOB — S114

CALCULATE, FOR EACH OF PRINTING APPARATUSES, ESTIMATED PRINTING COMPLETION TIME OF PRINT JOBS WAITING TO BE EXECUTED — S115

REGISTER ESTIMATED PRINTING COMPLETION TIMES TO DATABASE — S116

END

# FIG. 18

START

OBTAIN FIRST NUMBER OF SESSIONS — S121

OBTAIN SECOND NUMBER OF SESSIONS — S122

OBTAIN THIRD NUMBER OF SESSIONS — S123

SELECT PRINT JOB — S124

TRANSMIT PRINT JOB — S125

END

# FIG. 19

START

S131
NUMBER OF PRINT JOBS TO BE
TRANSMITTED m = M, M – 1, ..., 0

S143
WAIT FOR JOB
TRANSMISSION
PERIOD

S132
HAS NUMBER OF
TRANSMISSION SESSIONS REACHED
UPPER LIMIT?

Y

N

S133
n = 1, 2, ..., N
(N ≤ NUMBER OF PRINTING
APPARATUSES REGISTERED)

S134
IDENTIFY PRINTING APPARATUS
WHOSE ESTIMATED PRINTING
COMPLETION TIME IS n-TH SHORTEST

S135
ARE THERE
PRINT JOBS TO BE
TRANSMITTED TO IDENTIFIED
PRINTING APPARATUS?

Y

N

S137
SELECT PRINT JOB
WHOSE DATA SIZE IS SMALLEST

S138
HAS NUMBER OF
RECEPTION SESSIONS REACHED
UPPER LIMIT?

Y

N

S136
n ← n + 1

S142
m = 0

S141
UPDATE STATUS OF PRINT JOB
AND EXCLUDE PRINT JOB AS
TRANSMISSION TARGET

S140
TRANSMIT PRINT JOB

S139
SET SESSION

EP 4 492 217 B1

**EP 4 492 217 B1**

**Patent documents cited in the description**

- JP 2016033765 A

- US 20170371607 A1